# EUROPEAN PATENT APPLICATION

(11) **EP 4 375 813 A1**
(43) Date of publication of application: **29.05.2024**
(21) Application number: 22306733.1
(22) Date of filing: 24.11.2022
(51) Int. Cl.: G06F 3/0346

(54) **DETECTION OF A ROTATION OF A MAGNET IN A USER-BORNE DEVICE WITH A PLURALITY OF MAGNETOMETERS**

(71) Applicant: Advanced Magnetic Interaction, AMI, 38170 Seyssinet-Pariset (FR)
(72) Inventor: Hautson, Tristan, 38170 Seyssinet-Pariset (FR); Chavin-Collin, Gireg, 38170 Seyssinet-Pariset (FR)
(74) Representative: Peterreins Schley

(57) **Abstract**

A user-borne device (100) comprises a housing (101) and a magnetic object (110) coupled to the housing (101). The magnetic object (110) has a magnetization direction (120) and the magnetic object (110) is configured to create a magnetic field (115) associated with the magnetization direction (120). The magnetization direction (120) is oriented with respect to the magnetic object (110) such that a rotation of the magnetic object (110) about a first rotation axis (112), a second rotation axis (114) and a third rotation axis (116) is detectable based on magnetic field measurements with a plurality of magnetometers (300). The first rotation axis (112), the second rotation axis (114) and the third rotation axis (116) are orthogonal with respect to each other. The user-borne device (100) is configured to control at least one trigger event based on a rotation of the magnetic object (110) about the first rotation axis (112), the second rotation axis (114) and/or the third rotation axis (116).

## Description

### TECHNICAL FIELD

The present disclosure relates to the technical field of determining and/or tracking a location of passive accessories, more specifically to a user-borne device, to a system for determining a manipulation of a user-borne device by a user, and to a method for determining a manipulation of a user-borne device by a user.

### BACKGROUND

In the technical field of location determination and/or tracking of a device held or worn by user (i.e., a user-borne device), the provision of a plurality of magnetometers allows to measure a magnetic field associated with a magnetic object arranged in or coupled to the user-borne device. The user-borne devices using this technology may be electronically and/or electrically passive. More specifically, electrically passive means that the user-borne device 100 may not comprise a power source (e.g., batteries) and/or means to receive power (e.g., wireless power transmission via an inductive coil) for powering an electronic feature of the user-borne device 100. Electronically passive means that no computation or processing occurs (or happens) on the user-borne device. The magnetometer measurements enable determining and/or tracking of the location of the magnetic object within a sensing volume created by the plurality of magnetometers. In some applications, the magnetic object may be arranged within a writing device (e.g., a stylus) which may be operated by a user on a writing support during a user operation. Based on the magnetic field measurements associated with the magnetic object, a location of the writing device on the writing support may be determined.

In current applications, a magnetic object arranged in or coupled to a user-borne device may be approximated by a dipole to allow its location determination and/or tracking within a sensing created by the plurality of magnetometers volume. The magnetic object approximated as a dipole may create a magnetic field which is rotationally symmetric about at least one axis. Such a magnetic object may be manipulated by a user within the sensing volume and may allow a tracking and/or location determination of its movement in five degrees of freedom. The five degrees of freedom may include a translation of the magnetic object (and the user-borne device, to the magnetic object is coupled to) along three axes, a first rotation about a first axis and a second rotation about a second axis. However, a rotation of the magnetic object about the at least one axis, to which the magnetic field is rotationally symmetric, may not be detectable. As a result, application fields and areas in passive accessory location determination and/or tracking may be limited. More specifically, certain movements of the magnetic object and/or of the user-borne device may not be detectable and may limit specific additional functions of the user-borne device.

Thus, the object of the present disclosure is to provide a user-borne device, a system and a method for determining a manipulation of a user-borne device by a user, which enable improved tracking and/or a location determination of a user-borne device manipulated within a sensing volume, and more specifically which enable improved functionalities in different application fields.

### SUMMARY

The present disclosure relates to a user-borne device as defined in claim 1, a system for determining a manipulation of a user-borne device by a user as defined in claim 14, and a method for determining a manipulation of a user-borne device by a user as defined in claim 15. The dependent claims depict advantageous embodiments of the present disclosure.

According to a first aspect of the present disclosure, a user-borne device comprises a housing and a magnetic object coupled to the housing. The magnetic object has a magnetization direction. The magnetic object is configured to create a magnetic field associated with the magnetization direction. The magnetization direction is oriented with respect to the magnetic object such that a rotation of the magnet object about a first rotation axis, a second rotation axis and a third rotation axis is detectable based on magnetic field measurements with a plurality of magnetometers. The first rotation axis, the second rotation axis and the third rotation axis are orthogonal with respect to each other. The user-borne device is configured to control at least one trigger event based on a rotation of the magnetic object about the first rotation axis, the second rotation axis and/or the third rotation axis. Such a user-borne device may allow its tracking and/or location determination in at least six degrees of freedom with only one magnetic object, since based on its magnetization direction orientation, a rotation of the magnetic object about three axes may be detectable within a sensing volume by a plurality of magnetometers. Thereby, tracking and/or location determination of the magnetic object and/or the user-borne device may be improved, more specifically e.g., without providing additional magnetic objects. Furthermore, additional functions can be integrated in the user-borne device and application fields of the user-borne device can be extended. At least one trigger event (e.g., associated with the additional functions) can be controlled by the user-borne device in an improved manner, as it may be associated with the detectable rotation about three axes. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable. The at least one trigger event may be initiated by a user manipulation of the user-borne device within a sensing volume. The at least one trigger event may cause an action and/or may be used to control an action in a digital environment (i.e., an environment which is controlled by a computer or a network of computers), more specifically a virtual environment, based on a user input. More specifically, the at least one trigger event may implement a user input on the user-borne device as an action within a virtual environment.

According to a second aspect of the present disclosure, a system for determining a manipulation of a user-borne device by a user is provided. The system comprises a user-borne device according to the first aspect of the present disclosure, and a plurality of magnetometers. The plurality of magnetometers is configured to measure the magnetic field created by the magnetic object. More specifically, the system may be configured to detect a rotation of the magnetic object about the first rotation axis, the second rotation axis and the third rotation axis based on the magnetic field measurements. Furthermore, the system may be configured to determine the at least one trigger event based on a rotation of the magnetic object about the first rotation axis, the second rotation axis and/or the third rotation axis. Such a system may allow the tracking and/or location determination of a user-borne device, more specifically an electronically and/or electrically user-borne device, in at least six degrees of freedom with only one magnetic object, since based on its magnetization direction orientation, a rotation of the magnetic object about three axes can be detected within a sensing volume created by the plurality of magnetometers. Thereby, tracking and/or location determination of the magnetic object and/or the user-borne device may be improved, more specifically e.g., without providing additional magnetic objects. Furthermore, additional functions can be integrated in the user-borne device and application fields of the user-borne device and the system can be extended. At least one trigger event (e.g., associated with the additional functions) can be controlled by the user-borne device and/or detected by the system in an improved manner, as it may be associated with the detectable rotation about three axes. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

According to a third aspect of the present disclosure, a method for determining a manipulation of a user-borne device by a user is provided. The method comprises obtaining magnetic field measurements associated with a magnetic field created by a magnetic object and measured with a plurality of magnetometers. The magnetic object is coupled to a user-borne device and the magnetic object comprises a magnetization direction being at an orientation with respect to the magnetic object. The method further comprises detecting a rotation of the magnetic object about a first rotation axis, a second rotation axis and a third rotation axis, more specifically of the magnetic object, based on the obtained magnetic field measurements. The first rotation axis, the second rotation axis and the third rotation axis are orthogonal with respect to each other. In addition, the method comprises determining at least one trigger event based on the detected rotation. Such a method may allow the tracking and/or location determination of a user-borne device, more specifically an electronically and/or electrically user-borne device, in at least six degrees of freedom with only one magnetic object, since based on its magnetization direction orientation, a rotation of the magnetic object about three axes can be detected within a sensing volume created by the plurality of magnetometers. Thereby, tracking and/or location determination of the magnetic object and/or the user-borne device may be improved, more specifically e.g., without providing additional magnetic objects. Furthermore, additional functions can be integrated in the user-borne device and application fields of the user-borne device and the system can be extended. At least one trigger event (e.g., associated with the additional functions) can be controlled by the user-borne device and/or detected by the system in an improved manner, as it may be associated with the detectable rotation about three axes. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a user-borne device and a system for determining a manipulation of a user-borne device by a user according to aspects of the present disclosure;
- **Fig. 2A and 2B**: are schematic views of a magnetic object comprising a magnetization direction
- **Fig. 3**: are schematic views of a magnetic object in different orientations and the associated magnetic fields;
- **Figs. 4A to 4D**: are schematic views of a first embodiment of the user-borne device having a first arrangement of a magnetic object in the user-borne device;
- **Figs. 5A to 5D**: are schematic views of a first embodiment of the user-borne device having a second arrangement of a magnetic object in the user-borne;
- **Figs. 6A to 6D**: are schematic views of a first embodiment of the user-borne device having a third arrangement of a magnetic object in the user-borne device;
- **Figs. 7A to 7D**: are schematic views of a first embodiment of the user-borne device having a fourth arrangement of a magnetic object in the user-borne device;
- **Figs. 8A to 8D**: are schematic views of a first embodiment of the user-borne device having a fifth arrangement of a magnetic object in the user-borne device;
- **Figs. 9A to 9D**: are schematic views of a first embodiment of the user-borne device having a sixth arrangement of a magnetic object in the user-borne device;
- **Figs. 10A and 10B**: are schematic views of a second embodiment of a user-borne device and a system for determining a manipulation of a user-borne device by a user according to aspects of the present disclosure;
- **Fig. 11**: is a schematic view of the user-borne device and the system shown in Figs. 10A and 10B, wherein the user-borne device controls a trigger event.
- **Fig. 12**: is a schematic view of the user-borne device and the system shown in Figs. 10A and 10B, wherein the user-borne device is turned with respect to the interaction surface to permit a writing and/or drawing mode;
- **Fig. 13**: is a schematic view of an arrangement of a plurality of magnetometers;
- **Fig. 14**: is a schematic view of a user-borne device according to the first aspect of the present disclosure, wherein the user-borne device is translated on an interaction surface;
- **Fig. 15**: is a schematic view of a process flow diagram of a method for determining a manipulation of a user-borne device by a user according to a third aspect of the present disclosure.

### DETAILED DESCRIPTION

Embodiments of the user-borne device, the system and the method for determining a manipulation of a user-borne device by a user according to the present disclosure will be described in reference to the drawings as follows.

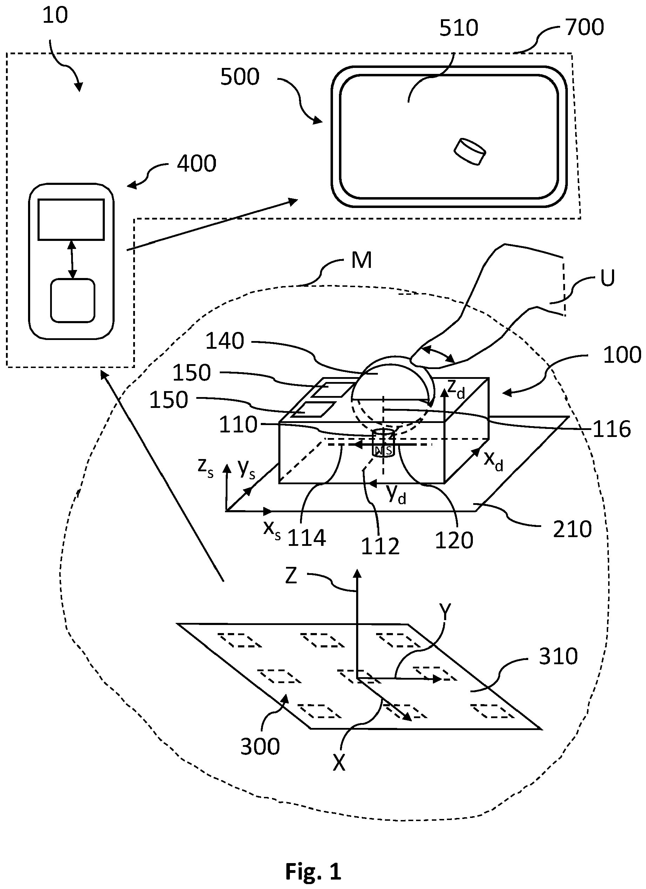

Fig. 1 schematically illustrates a user-borne device 100 according to a first aspect of the present disclosure. The user-borne device 100 comprises a housing 101, a magnetic object 110 coupled to and/or arranged in the housing 101. The magnetic object 110 has a magnetization direction 120, wherein the magnetic object 110 is configured to create a magnetic field 115 associated with the magnetization direction 120. The magnetization direction 120 is oriented with respect to the magnetic object 110 such that a rotation of the magnet object 110 about a first rotation axis 112, a second rotation axis 114 and a third rotation axis 116 is detectable based on magnetic field measurements with a plurality of magnetometers 300. The first rotation axis 112, the second rotation axis 114 and the third rotation axis 116 are orthogonal with respect to each other. The user-borne device 100 is configured to control at least one trigger event based on a rotation of the magnetic object 110 about the first rotation axis 112, the second rotation axis 114 and/or the third rotation axis 116. Such a user-borne device 100 may allow its tracking and/or location determination in at least six degrees of freedom with only one magnetic object 110, since based on its magnetization direction orientation, a rotation of the magnetic object 110 about three axes may be detectable within a sensing volume M by a plurality of magnetometers. Thereby, tracking and/or location determination of the magnetic object 110 and/or the user-borne device 100 may be improved, more specifically e.g., without providing additional magnetic objects. Furthermore, additional functions can be integrated in the user-borne device 100 and application fields of the user-borne device 100 can be extended. At least one trigger event (e.g., associated with the additional functions) can be controlled by the user-borne device in an improved manner, as it may be associated with the detectable rotation about three axes. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

The user-borne device 100 may be electrically and/or electronically passive. More specifically, electrically passive means that the user-borne device 100 may not comprise a power source (e.g., batteries) and/or means to receive power (e.g., wireless power transmission via an inductive coil) for powering a feature (e.g., an electronic feature) of the user-borne device 100. Electronically passive means that no computation or processing occurs (or happens) on the user-borne device 100.

The term "magnetic object" may refer to an object which may comprise components made of magnetic material, i.e., a material that has magnetic properties measurable by the plurality of magnetometers 300. The user-borne device 100 and/or the magnetic object 210 may be mobile, i.e., freely movable within a reference coordinate system XYZ as described below. In other words, during a user operation (i.e., an operation wherein the user-borne device 100 and/or the magnetic object 110 is operated by a user), the location of the user-borne device 100 within the sensing volume M and/or relative to an interaction surface 210 may be manipulated by a user within the sensing volume M.

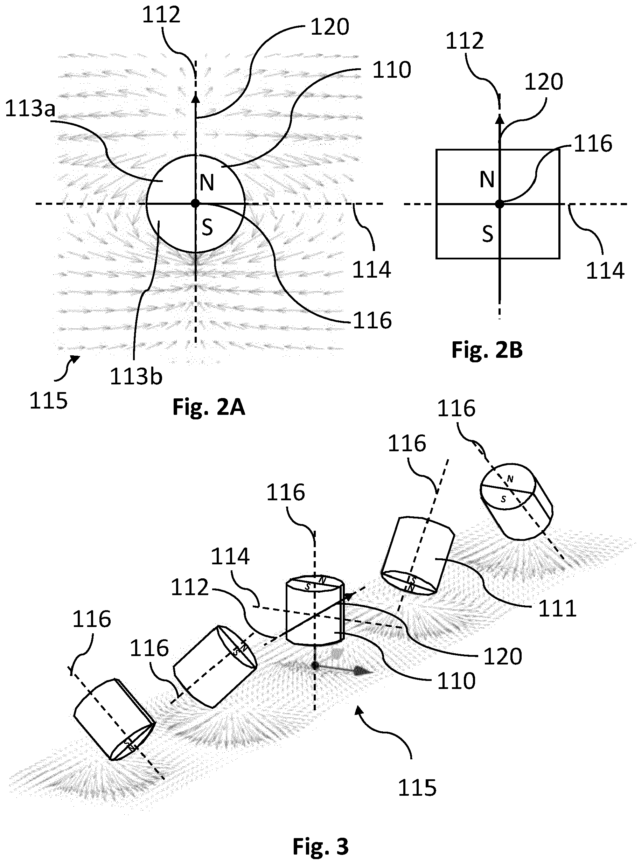

As indicated e.g., in Fig. 2A and 2B, the magnetization direction 120 may represent the position of a north pole 113a and south pole 113b in the magnetic object 110. Based on the magnetization direction 120, the magnetic object 110 may create an associated magnetic field. In embodiments, the magnetic object 110 may comprise a longitudinal body 111 extending along the third rotation axis 116. The magnetization direction 120 may be oriented with respect to the magnetic object 110 such that a rotation of the magnetic object 110 about the magnetization direction 120 is detectable based on the magnetic field measurements with the plurality of magnetometers 300. In other words, the magnetization direction 120 may define a magnetization axis which may be oriented with respect to the magnetic object 110 such that orientation about the magnetization axis may be detectable by the plurality of magnetometers. The magnetization axis may be defined by the magnetization direction 120 and a center of mass of the magnetic object 110. More specifically, the magnetization axis may extend through the center of mass of the magnetic object 110. The magnetization direction 120 may be inclined with respect to the third rotation axis 116. In other words, the magnetization direction 120 may not be parallel to the third rotation axis 116. In the examples shown in Figs. 2A to 3, the magnetization direction 120 may be orthogonal to the third rotation axis 116. More specifically, the magnetization direction 120 may extend parallel to a plane defined by the first rotation axis 112 and the second rotation axis 114. In some embodiments, the first rotation axis 112 may be parallel, more specifically coaxial, to the magnetization direction 120. In the embodiments shown in Figs. 2A and 3, the longitudinal body 111 of the magnetic object 110 may comprise a cylindrical shape. In an embodiment, the magnetic object 120 may be diametrically magnetized. This means that the magnetization direction 120 may be along the diameter of the magnetic object 110. In diametrical magnetization, the north and south poles may be arranged opposite each other along the length of the magnetic object 110, more specifically on the curved side of the magnetic object 110. In case, the longitudinal body 111 may be cylindrical.

In other embodiments, e.g., as indicated in Fig. 2B, the magnetic object 110 may comprise a cuboid shape. In this case, the magnetic object 120 may be width magnetized, or, the magnetic object 120 may be thickness magnetized. More specifically, the magnetic object 110 may comprise a length measured along the longitudinal body 111, a width and a thickness measured orthogonal with respect to the longitudinal body 111. The magnetic object 120 may comprise a magnetization direction 120 along the width or the thickness.

In other embodiments, the magnetic object 110 may be a quadrupole. In other words, the magnetic object 110 may comprise south poles and north poles arranged in an alternating manner. In some other embodiments, the magnetic object 110 may be e.g., circumference magnetized. However, in the context of the present disclosure, all of the described embodiments may require a magnetization direction 120, which allows the detection of a rotation about the magnetization direction 120.

Referring to Fig. 3, the magnetic object 110 is shown in different orientations, and a magnetic field of the respective orientations is illustrated. The magnetic object 110, more specifically based on the magnetization direction 120, may be configured to create an asymmetric magnetic field 115, more specifically wherein the magnetic field 115 may be rotationally asymmetric. The magnetic object 110 may comprise any combination of a south pole and north pole, or south poles and north poles, as long as these provide a magnetization direction 120 being at an orientation with respect to the magnetic object 110 such that detecting a rotation about the magnetization direction 120 (and/or about the first rotational axis 112, the second rotational axis 114 and the third rotational axis 116) is enabled. As an example, this may be not the case for an axially magnetized magnetic object. Thereby, a rotation of the magnetic field 115 may be detectable about the first rotation axis 112, the second rotation axis 114 and the third rotation axis 116. The magnetic object 110 may be a permanent magnet. In embodiments, the magnetic object 110 may be configured to generate a non-zero magnetic field. It may comprise a paramagnetic or diamagnetic material. In embodiments, the magnetic object 110 may comprise a ferromagnetic material or a ferrimagnetic material.

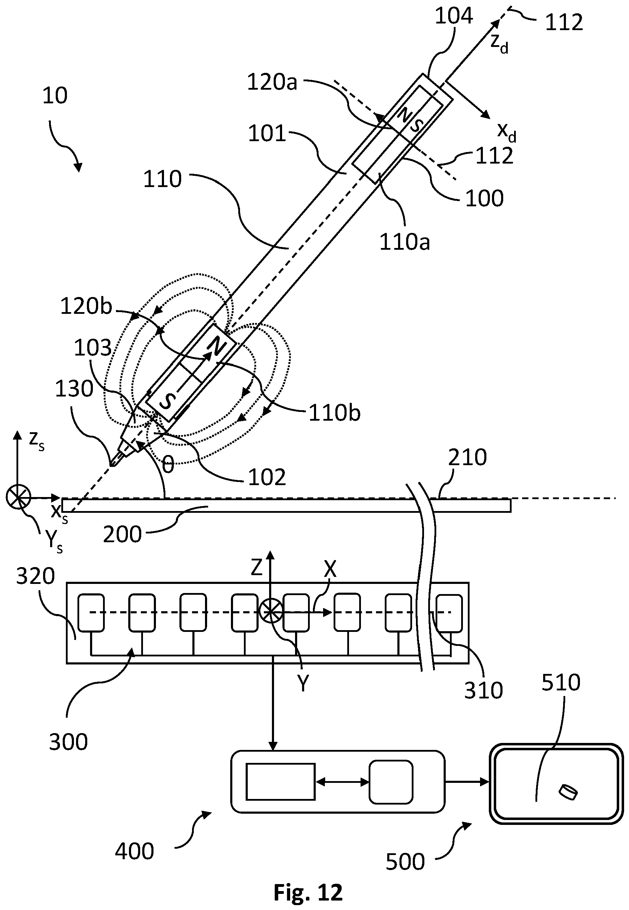

Referring back to Fig. 1, the user-borne device 100, more specifically the housing 101, may comprise a device coordinate system. The device coordinate system may comprise a first device axis x_{d}, a second device axis y_{d} orthogonal to the first device axis x_{d}, and a vertical device axis z_{d}. The vertical device axis z_{d} may be orthogonal to a device contact surface or point 130 and/or orthogonal to a plane defined by the first device axis x_{d} and the second device axis y_{d}. The device contact surface or point 130 may be the part of the user-borne device 100 which, during a user operation, may be in contact with an interaction surface 210 (i.e., the surface on which the user-borne device 100 may be operated in some embodiments). In examples, e.g., as shown in Fig. 1, the user-borne device 100 may be a computer mouse and may comprise a contact surface 130 when contacting an interaction surface 210. In other examples (see, e.g., Figs. 12), the user-borne device may comprise a contact point 130 (e.g., a stylus or other writing device comprising a writing tip which contacts an interaction surface 210 during a writing operation). In other examples, the user-borne device 100 may be operated within a sensing volume M but not on an interaction surface 210. In this case, the user-borne device 100 may be used, e.g., as a pointer. In some embodiments, the device coordinate system may be defined within a geometric center of the user-borne device 100. The interaction surface 210 may comprise a first surface axis xₛ, a second surface axis yₛ, and a vertical surface axis zₛ, more specifically wherein the axes may be orthogonal with respect to each other (see, e.g., Fig. 1). The first surface axis xₛ and the second surface axis yₛ may be defined on the interaction surface 210.

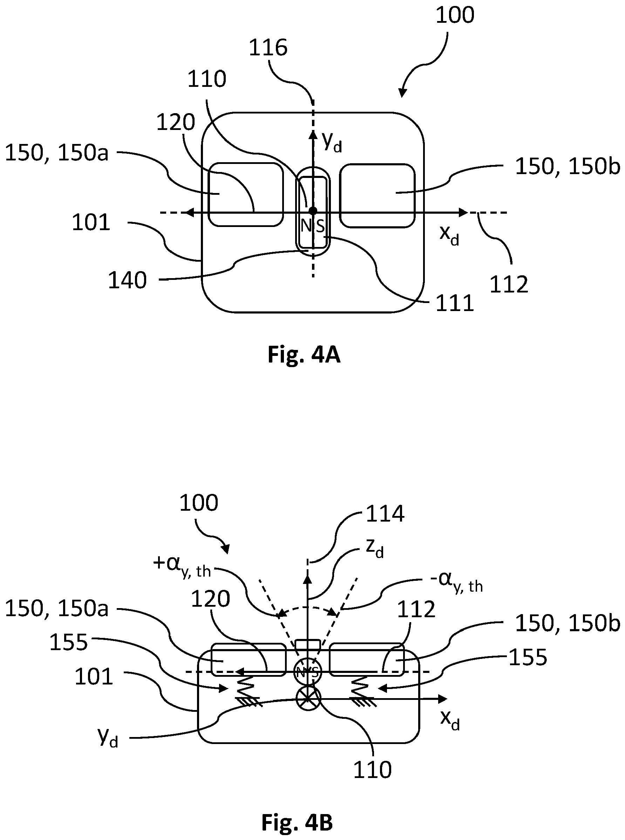

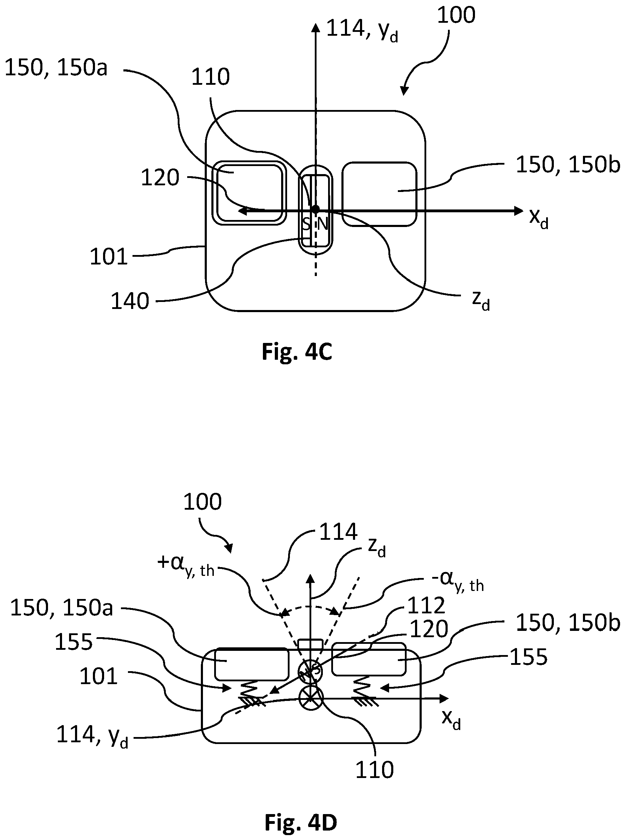

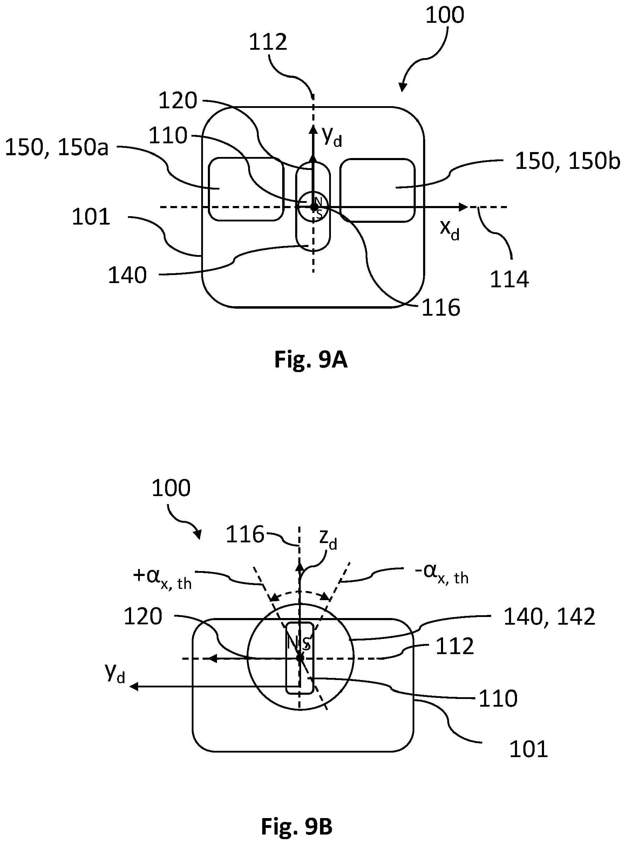

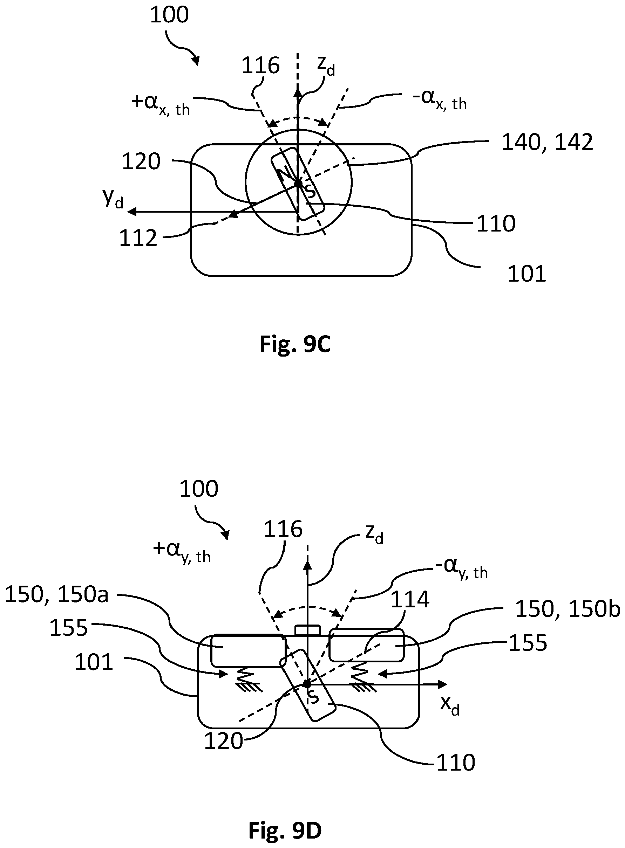

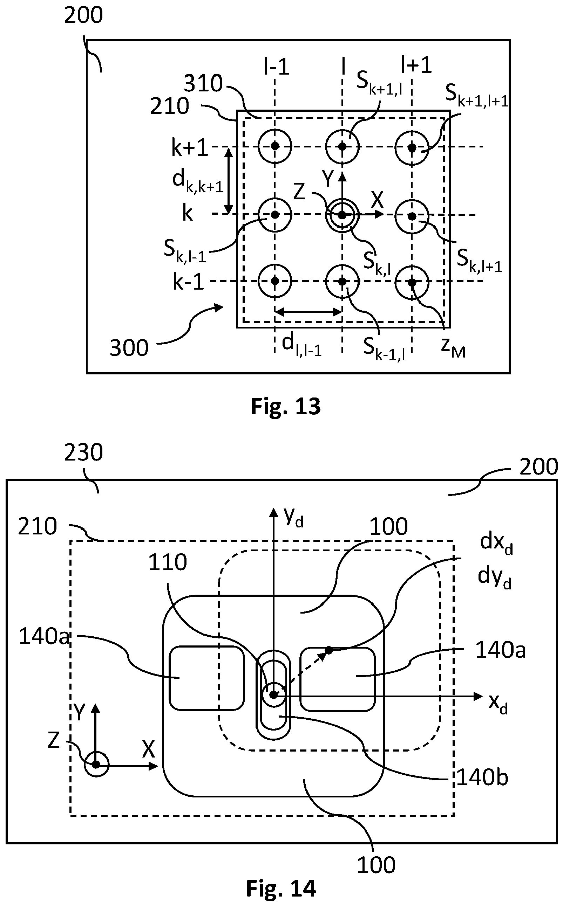

Referring to Figs. 4A to 9D, a first embodiment of the user-borne device 100 is shown. Some arrangements of a magnetic object 110 coupled to and/or arranged in the user-borne device 100 are now described in detail for the first embodiment. In this embodiment, the user-borne device 100 may be a computer mouse, a keyboard, a toy, a writing medium, a pointer, a finger ring, or a dial. The user-borne device 100 may be operable on an interaction surface 210. Referring to Fig. 14, a movement of the user-borne device 100 on the interaction surface 10 is illustrated. The user-borne device 100 may be translatable on the interaction surface 210 along the first device axis x_{d} and/or the second device axis y_{d}. In this embodiment, the user-borne device 100 may be a computer mouse. During a user operation, the user-borne device 100 may be moved on the interaction surface 210 from a position x_{d}, y_{d}, to a position dx_{d}, dy_{d}. The system 10 may be configured to track this movement based on determining the user-borne device location.

The magnetic object 110 may be arranged rotatable with respect to the housing 101. A first rotation angle αₓ may be defined as a first rotation of the magnetic object 110 about the first device axis x_{d}. A second first rotation angle α_{y} may be defined as a second rotation of the magnetic object 110 about the second device axis y_{d}. As indicated in Figs. 4A and 4B, the user-borne device 100 may comprise at least one scroll manipulation feature 140 and/or at least one click manipulation feature 150. In some embodiments, the at least one scroll manipulation feature 140 may be integrated in the at least one click manipulation feature 150, and/or vice versa. The at least one trigger event may be a scroll event and/or a click event. The at least one scroll manipulation feature 140 and/or the at least one click manipulation feature 150 may be movably coupled to the housing 101 and actuatable by a user U. The magnetic object 110 may be operationally coupled to the at least one click manipulation feature 150 and/or to the at least one scroll manipulation feature 140 such that an actuation of the at least one click manipulation feature 150 and/or the at least one scroll manipulation feature 140 may cause a rotation of the magnetic object 110 with respect to the housing 101. The user-borne device 100 may be in an initial state when the at least one click manipulation feature 150 and/or the at least one scroll manipulation feature 140 are in an initial position. More specifically, in the initial state and/or the initial location, the at least one click manipulation feature 150 and/or the at least one scroll manipulation feature 140 may not actuated by a user U. As shown in Fig. 4B, the at least one click manipulation feature 150 may not be actuated and the magnetic obj ect may be in the initial location, i.e., the user-borne device 100 may be in the initial state. Referring to Fig. 4D, the at least one click manipulation feature 150 manipulation feature (see, element 150a) may be actuated and the magnetic object 110 may be in the actuated location, i.e., the user-borne device 100 may be in the actuated state. More specifically, in the actuated state of the user-borne device 100, the magnetic object 110 may be rotated relative to the housing 110 and/or the at least one click manipulation feature 150 and/or the at least one scroll manipulation 140 may be actuated by a user U.

As shown e.g., in Figs. 4B and 4D, the user-borne device 100 may comprise a biasing mechanism 155. The biasing mechanism 155 may be configured to urge the magnetic object 110, the at least one click manipulation feature 150 and/or the at least one scroll manipulation feature from the actuated state to the initial state, more specifically from the actuated location to the initial location. More specifically, when a user actuates (e.g., applies a force on) the at least one click manipulation feature 150 and/or the at least one scroll manipulation feature, the at least one click manipulation feature 150 and/or the at least one scroll manipulation feature 140 and the magnetic object 110 may be moved (particularly rotated) from the initial location to the actuated location. In this case, the biasing mechanism 155 may be biased. When a user releases the force on the at least one click manipulation feature 150 and/or the at least one scroll manipulation feature, the at least one click manipulation feature 150 and/or the at least one scroll manipulation feature 140 and the magnetic object 110 may be urged from the actuated location to the initial location.

The at least one trigger event may be initiated by a user manipulation of the user-borne device 100, more specifically the electrically and/or electronically user-borne device 100, within the sensing volume M. The at least one trigger event may cause an action and/or may be used to control an action in a in a digital environment (i.e., an environment which is controlled by a computer or a network of computers), more specifically a virtual environment, based on a user input. More specifically, the at least one trigger event may implement a user input on the user-borne device as an action within a digital environment, more specifically a virtual environment. For instance, the at least one user-borne device 100 may be used together with an electronics device 700, e.g., a tablet, a cell phone, a laptop, a computer, a virtual reality (VR) set or a television. The at least one trigger event may cause an action on the electronics device 700 and/or may be used to control an action on the electronics device 700 based on a user input on the user-borne device 100.

As mentioned above, the at least one trigger event may be a scroll event and/or a click event. Additionally or alternatively, the at least one trigger event may be an actual orientation event.

A scroll event and/or a click event and/or an actual orientation event may be applied to various different application fields. An actual orientation event may be an event being associated with a particular orientation of the magnetic object 110 relative to the reference coordinate system XYZ. In examples, the actual orientation event may trigger a selection action based on a rotation of the magnetic object 110. In some examples the actual orientation event may identify specific elements or attributes or features, and/or may associate specific elements or attributes or features with each other, more specifically in a virtual environment. A scroll event may trigger a scroll action in a digital environment, more specifically a virtual environment, based on a user input, e.g., "scroll up" and "scroll down" on a display. A scroll event may cause or provide a control of a rotational and/or translational movement of a virtual object in a virtual environment that is associated with a user input. For instance, a scroll event may trigger a scroll action including scrolling of files or data, a rotational or translational movement of the virtual object associated with a selection of a choice from a plurality of choices. The scroll action may also include rotating a body in a virtual environment and/or changing a perspective in a virtual environment. Furthermore, a scroll action may include one or more of moving a cursor in two opposing directions (e.g., horizontal or vertical on an output device), moving a displayed element (e.g. a page, a cursor), which may be controlled by the user-borne device 100, a step in a direction, flipping through a menu, flipping through a selection list, or adjusting (e.g. increasing or decreasing) a parameter (e.g. a setting or a configuration). A click event may trigger a click action (more specifically of a virtual object) in a digital environment, more specifically a virtual environment, based on a user input. A click event may include, e.g., a selection of an object (like a button, a file, an icon or another object), a selection of an item, a selection of a list, a selection of an item on a list. A click event may trigger a following action. A click event may trigger an action that provides additional information and/or properties of an object, an item or a text (e.g., letter, word, phrase) selected. A click event may trigger click action or left click action including a single click action, a double click action, a triple click action, a right click action and/or a click-and-drag action within a virtual environment. A single click action may refer to selection of an object within a virtual environment. A double click action may open a file or execute a program within a virtual environment. A click-and-drag action may include clicking, holding and moving an object, e.g., which may be used to highlight or drag-select a text or an object. A triple click action may be used to select a paragraph of a text. A right click action may perform a special action, e.g., opening a list with additional information and/or properties for a selected object as mentioned above. The action that is triggered by the click event may depend on the user's input on the user-borne device 100. For example, the click event may cause a double-click action when a user provides two quick and successive inputs on the user-borne device 100. The above-mentioned features enables various new application fields for the user-borne device 100, for example a computer-mouse, a keyboard, a dial, a mouse scroll element (e.g. a wheel), a joystick, a control for an electronic device (e.g. an audio control or a visual control), a control of software settings or visualizations (e.g. graphic software or design software), or a control of a computer game.

Referring to Figs. 4A to 9D, the user-borne device 100 may be configured to control a click event only when an absolute value of the second rotation angle α_{y} exceeds a second rotation angle threshold α_{y}, ₜₕ. More specifically, a click event may be a first click event (e.g., "a left click") when the second rotation angle α_{y} is positive relative to the initial state and/or initial location. A click event may be a second click event (e.g., a "right click") when the second rotation angle (α_{y}) is negative relative to the initial state and/or initial location. The first click and the second click may be associated with different trigger events, e.g., with different selection functions. The first click event may trigger a left click action, more specifically a single click action, a double click action, a triple click action, and/or a click-and-drag action as described above. The second click event may further trigger an action which provides additional information and/or properties of an object, item or word selected, i.e., may trigger the right click action as described above. An example of a sequentially executed combination of first click event and second click event may be a copy-and-paste action on an electronics device 700. In an embodiment, the at least one click manipulation feature 150 may comprise a first click manipulation feature 150a and a second click manipulation feature 150b as indicated in Figs. 4A to 9D. The first click manipulation feature 150a may be associated with the first click event. The second click manipulation feature 150b may be associated with the second click event. In embodiments, the user-borne device 100 may be configured to control a scroll event only when an absolute value of the first rotation angle αₓ exceeds a first rotation angle threshold αₓ, ₜₕ. A scroll event may be a first scroll event, more specifically a scroll up event, when the first rotation angle αₓ is positive relative to the initial state and/or initial location. The scroll event may be a second scroll event, more specifically a scroll down event, when the first rotation angle αₓ is negative relative to the initial state and/or initial location. The first scroll event and the second scroll event may be associated with different trigger events. As already outlined above, a combination of a scroll event and a click event may also be possible. In an example, the scroll manipulation feature 140 may be a scroll wheel, e.g., a wheel rotatably coupled to the user-borne device 100 which provides the scroll event based on a rotation of the scroll wheel. A click manipulation feature 150 may be integrated into the scroll wheel and may be translated relative to the housing 101 based on a user manipulation. Thus, the scroll wheel may be rotated and/or translated to provide a scroll event and/or a click event caused by a user manipulation. The rotation of the scroll wheel may provide the first scroll event and/or the second scroll event as defined above, and a "click" on the scroll wheel may provide the first or the second click event as defined above. The at least one scroll manipulation feature 150 may also be implemented as a 360 degree scroll ball, wherein a scroll event may allow, e.g., a movement of a cursor vertically and horizontally. In other embodiments, the at least one click manipulation feature 150 may also be integrated as a side click feature (e.g., a side button arranged on a side of the user-borne device 100) which may provide additional click events, e.g., as a host of any customizable features (e.g., pre-programmed options for user-borne device settings).

In a first arrangement shown in Figs. 4A to 4D, a high control and/or determination accuracy may be achieved based on a click actuation and/or a rotation (i.e., a change in orientation) of the user-borne device 100 relative to the interaction surface 210. In the initial state of the user-borne device 100, the magnetic object 110 may be arranged in the housing 101 such that the first rotation axis 112 may be parallel to the first device axis x_{d}, the second rotation axis 114 may be parallel to the vertical device axis z_{d}, and the third rotation axis 116 may be parallel to the second device axis y_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the second rotation axis 114 relative to the housing 101. In the initial state of the user-borne device 100, the magnetization direction 120 may be parallel to the first device axis x_{d}. An actuation of the at least one click manipulation feature 150 may cause a rotation of the magnetic object 110 with respect to the housing 101 about the third rotation axis 116 by a second rotation angle α_{y}. More specifically, the magnetization direction 120 may be rotated about the third rotation axis 116 by the second rotation angle α_{y}. The user-borne device 100 may be configured to control a click event based on the rotation of the magnetization direction 120 about the third rotation axis 116 by the second rotation angle α_{y}. As the actuation of the at least one click manipulation feature 150 causes a rotation of the magnetization direction 120 about the third rotation axis 116, high accuracy for controlling a click event may be achieved. An actuation of the at least one scroll manipulation feature 140 may cause a rotation of the magnetic object 110 with respect to the housing 101 about the first rotation axis 112 by a first rotation angle αₓ, more specifically wherein the magnetic object 110 may be rotated about the magnetization direction 120 by the first rotation angle αₓ, particularly about a magnetization axis defined by the magnetization direction 120. The rotation axis 112 may be parallel, more specifically coaxial, to the magnetization direction 120. Such a rotation of the magnetic object 110 about the first rotation axis 112, more specifically about the magnetization direction 120, may be detectable by the plurality of magnetometers due to the orientation of the magnetization direction 120 with respect to the magnetic object 110. A rotation of the user-borne device 100 relative to the interaction surface 210 may lead to a rotation of the magnetization direction 120 relative to the interaction surface 210. As the magnetization direction 120 rotates relatively to the interaction surface 210 based on a change of the user-borne device 110 orientation, a high accuracy in determining the rotation of the user-borne device 110 may be achieved. The user-borne device 100 may be configured to control a scroll event based on the rotation of the magnetic object 110 about the first rotation axis 112 by the first rotation angle αₓ, more specifically about the magnetization direction 120, particularly about the magnetization axis defined by the magnetization direction 120).

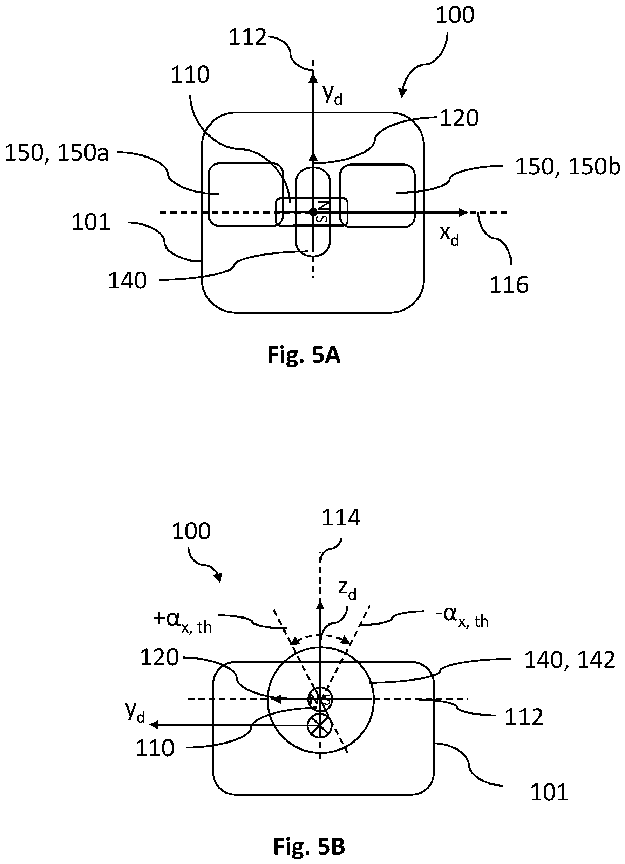

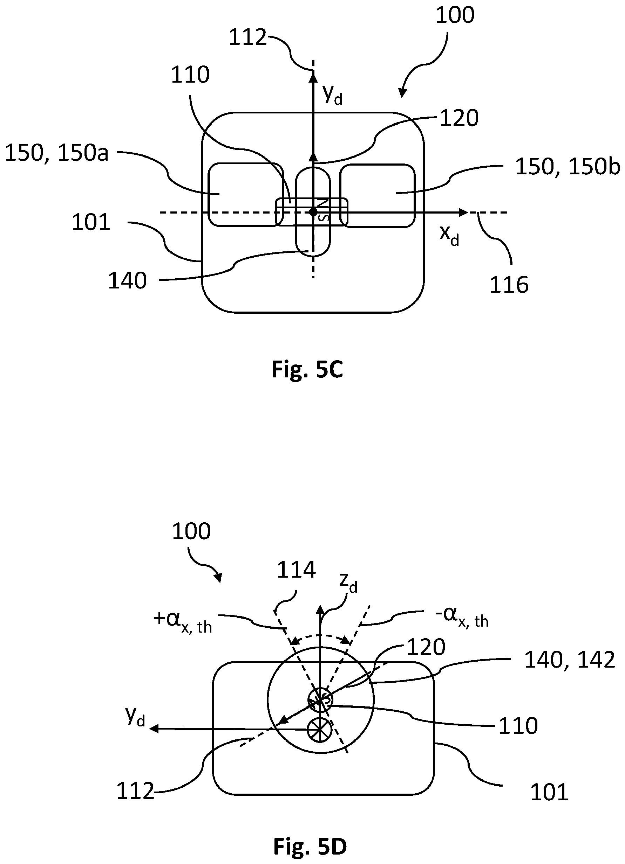

In a second arrangement shown in Figs. 5A to 5D, a high control and/or determination accuracy may be achieved based on a scroll actuation and/or a rotation (i.e., a change in orientation) of the user-borne device 100 relative to the interaction surface 210. In the initial state of the user-borne device 100, the magnetic object 110 may be arranged in the housing 101 such that the first rotation axis 112 may be parallel to the second device axis y_{d}, the second rotation axis 114 may be parallel to the vertical device axis z_{d}, and the third rotation axis 116 may be parallel to the first device axis x_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the second rotation axis 114 relative to the housing 101. In the initial state of the user-borne device 100, the magnetization direction 120 may be parallel to the second device axis y_{d}. An actuation of the at least one scroll manipulation feature 140 may cause a rotation of the magnetic object 110 with respect to the housing 101 about the third rotation axis 116 by a first rotation angle αₓ. More specifically, the magnetization direction 120 may be rotated about the third rotation axis 116 by the first rotation angle αₓ. The user-borne device 100 may be configured to control a scroll event based on the rotation of the magnetization direction 120 about the third rotation axis 116 by the first rotation angle αₓ. As the actuation of the at least one scroll manipulation feature 140 causes a rotation of the magnetization direction 120 about the third rotation axis 116, high accuracy for controlling a scroll event may be achieved. An actuation of the at least one click manipulation feature 150 may cause a rotation of the magnetic object 110 with respect to the housing 101 about the first rotation axis 112 by a second rotation angle α_{y}, more specifically wherein the magnetic object 110 may be rotated about the magnetization direction 120 by the second rotation angle α_{y}, particularly about a magnetization axis defined by the magnetization direction 120. The rotation axis 112 may be parallel, more specifically, coaxial to the magnetization direction 120. Such a rotation of the magnetic object 110 about the first rotation axis 112, more specifically about the magnetization direction 120, may be detectable by the plurality of magnetometers due to the orientation of the magnetization direction 120 with respect to the magnetic object 110. A rotation of the user-borne device 100 relative to the interaction surface 210 may lead to a rotation of the magnetization direction 120 relative to the interaction surface 210. As the magnetization direction 120 rotates relatively to the interaction surface 210 based on a change of the user-borne device orientation, a high accuracy in determining the rotation of the user-borne device 100 may be achieved. The user-borne device 100 may be configured to control a click event based on the rotation of the magnetic object 110 about the first rotation axis 112 by the second rotation angle α_{y}, more specifically about the magnetization direction 120, particularly about the magnetization axis defined by the magnetization direction 120.

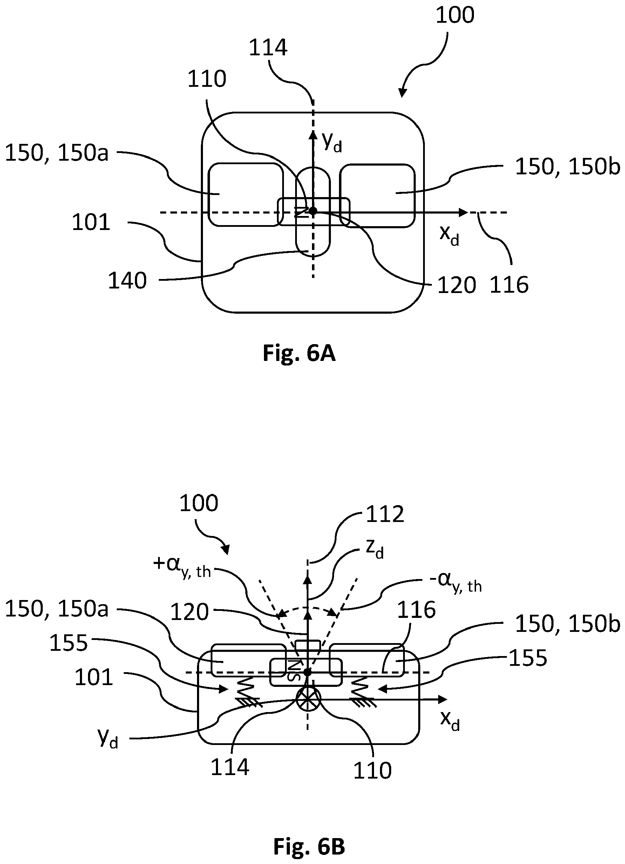

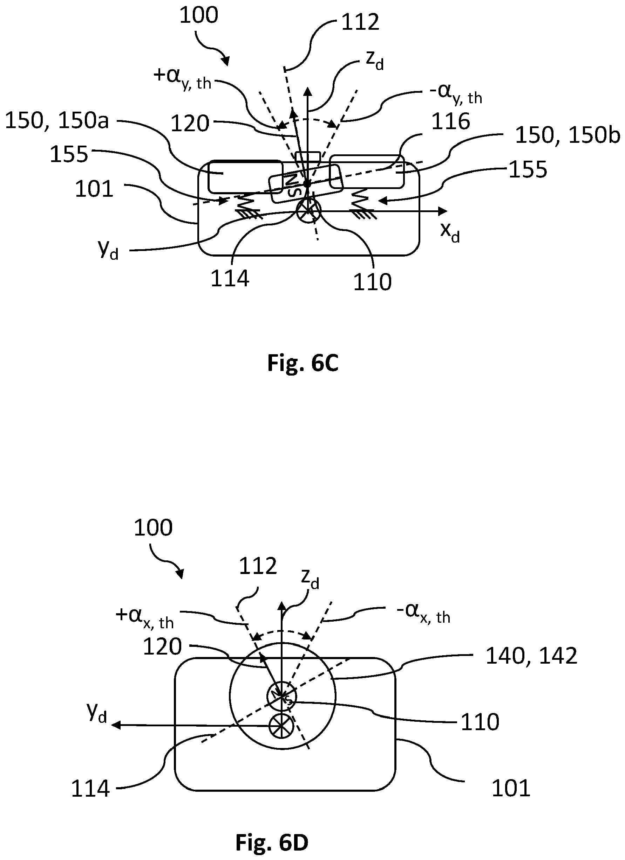

In a third arrangement shown in Figs. 6A to 6D, a high control and/or determination accuracy may be achieved based on a scroll actuation and/or click actuation. In the initial state of the user-borne device 100, the magnetic object 110 may be arranged in the housing 101 such that the first rotation axis 112 may be parallel to the vertical device axis z_{d}, the second rotation axis 114 may be parallel to the second device axis y_{d}, and the third rotation axis 116 may be parallel to the first device axis x_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the first rotation axis 112 relative to the housing 101. In the initial state of the user-borne device 100, the magnetization direction 120 may be parallel to the vertical device axis z_{d}. An actuation of the at least one click manipulation feature 150 may cause a rotation of the magnetic object 110 with respect to the housing 101 about the second rotation axis 114 by a second rotation angle α_{y}. More specifically, the magnetization direction 120 may be rotated about the second rotation axis 114 by the second rotation angle α_{y}. The user-borne device 100 may be configured to control a click event based on the rotation of the magnetization direction 120 about the second rotation axis 114 by the second rotation angle α_{y}. As the actuation of the at least one click manipulation feature 150 causes a rotation of the magnetization direction 120 about the second rotation axis 114, high accuracy for controlling a click event may be achieved. An actuation of the at least one scroll manipulation feature 140 may cause a rotation of the magnetic object 110 with respect to the housing 101 about the third rotation axis 116 by a first rotation angle αₓ, more specifically wherein the magnetization direction 120 may be rotated about the third rotation axis 116 by the first rotation angle αₓ. The rotation axis 112 may be parallel, more specifically coaxial to the magnetization direction 120. A rotation of the magnetic object 110 about the first rotation axis 112, more specifically about the magnetization direction 120, may be detectable by the plurality of magnetometers 300 due to the orientation of the magnetization direction 120 with respect to the magnetic object 110. A rotation about the vertical device axis z_{d} of the user-borne device 100 relative to the interaction surface 210 may lead to a rotation of the magnetic object 110 about the first rotation axis 112, more specifically the magnetization direction 120, particularly about the magnetization axis defined by the magnetization direction 120. The user-borne device 100 may be configured to control a scroll event based on the rotation of the magnetization direction 120 about the third rotation axis 116 by the first rotation angle αₓ. As the actuation of the at least one scroll manipulation feature 140 causes a rotation of the magnetization direction 120 about the third rotation axis 116, high accuracy for controlling a scroll event may be achieved.

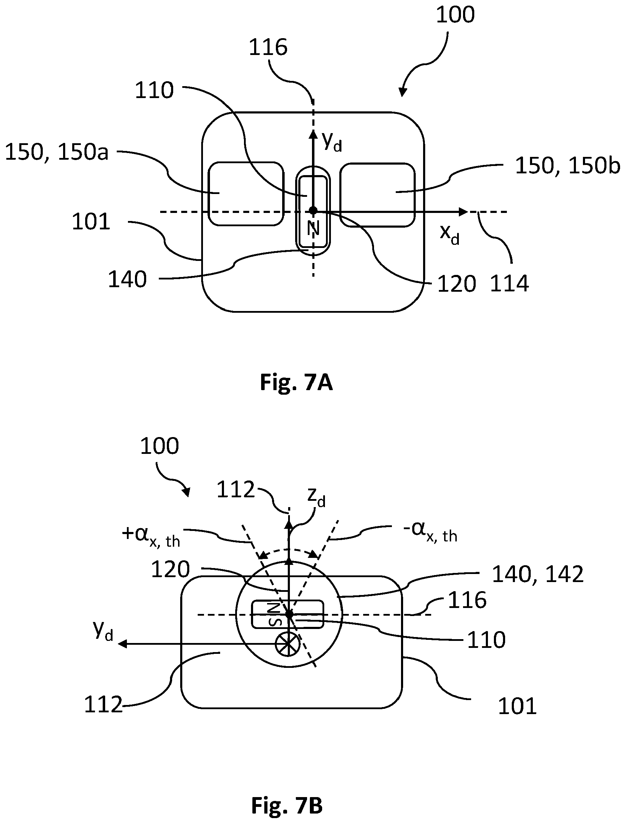

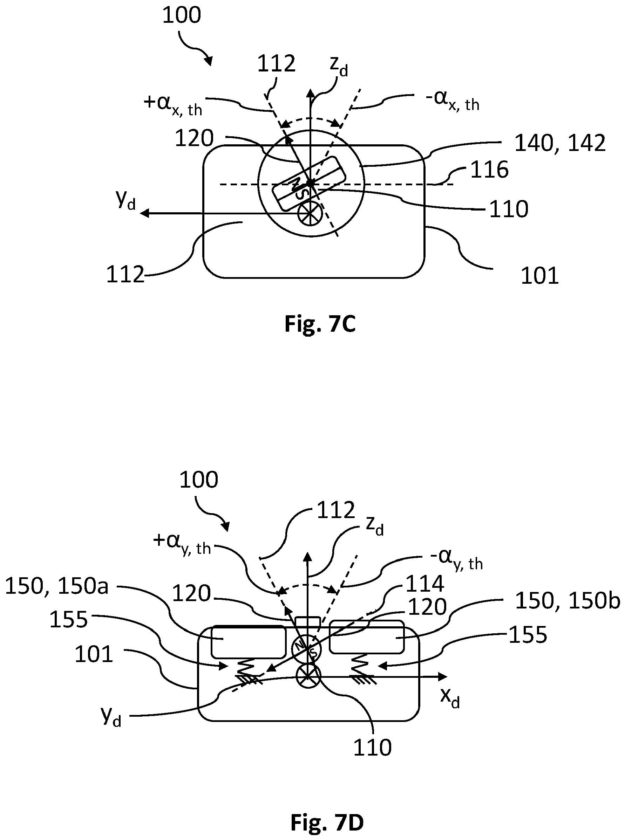

In a fourth arrangement shown in Figs. 7A to 7D, a high control and/or determination accuracy may be achieved based on a scroll actuation and/or click actuation. In the initial state of the user-borne device 100, the magnetic object 110 may be arranged in the housing 101 such that the first rotation axis 112 may be parallel to the vertical device axis z_{d}, the second rotation axis 114 may be parallel to the first device axis x_{d}, and the third rotation axis 116 may be parallel to the second device axis y_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the first rotation axis 112 relative to the housing 101. In the initial state of the user-borne device 100, the magnetization direction 120 may be parallel to the vertical device axis z_{d}. An actuation of the at least one click manipulation feature 150 may cause a rotation of the magnetic object 110 with respect to the housing 101 about the third rotation axis 116 by a second rotation angle α_{y}. More specifically, the magnetization direction 120 may be rotated about the third rotation axis 116 by the second rotation angle α_{y}. The user-borne device 100 may be configured to control a click event based on the rotation of the magnetization direction 120 about the third rotation axis 116 by the second rotation angle α_{y}. As the actuation of the at least one click manipulation feature 150 causes a rotation of the magnetization direction 120 about the third rotation axis 116, high accuracy for controlling a click event may be achieved. An actuation of the at least one scroll manipulation feature 140 may cause a rotation of the magnetic object 110 with respect to the housing 101 about the second rotation axis 114 by a first rotation angle αₓ, more specifically wherein the magnetization direction 120 may be rotated about the second rotation axis 114 by the first rotation angle αₓ. The rotation axis 112 may be parallel, more specifically, coaxial to the magnetization direction 120. A rotation of the magnetic object 110 about the first rotation axis 112, more specifically the magnetization direction 120, may be detectable by the plurality of magnetometers 300 due to the orientation of the magnetization direction 120 with respect to the magnetic object 110. More specifically, a rotation about the vertical device axis z_{d} of the user-borne device 100 relative to the interaction surface 210 may lead to a rotation of magnetic object 110 about the magnetization direction 120. The user-borne device 100 may be configured to control a scroll event based on the rotation of the magnetization direction 120 about the second rotation axis 114 by the first rotation angle αₓ. As the actuation of the at least one scroll manipulation feature 140 causes a rotation of the magnetization direction 120 about the second rotation axis 114, high accuracy for controlling a scroll event may be achieved.

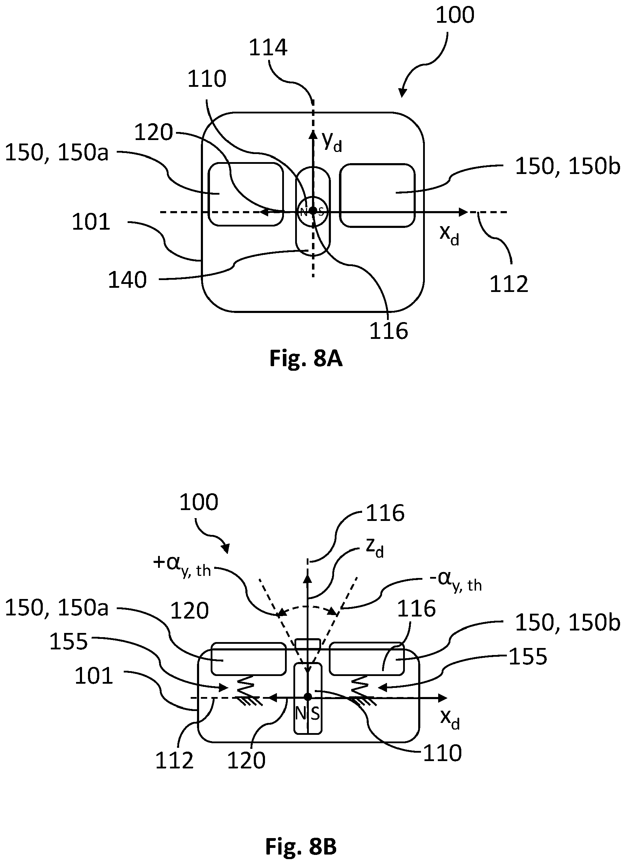

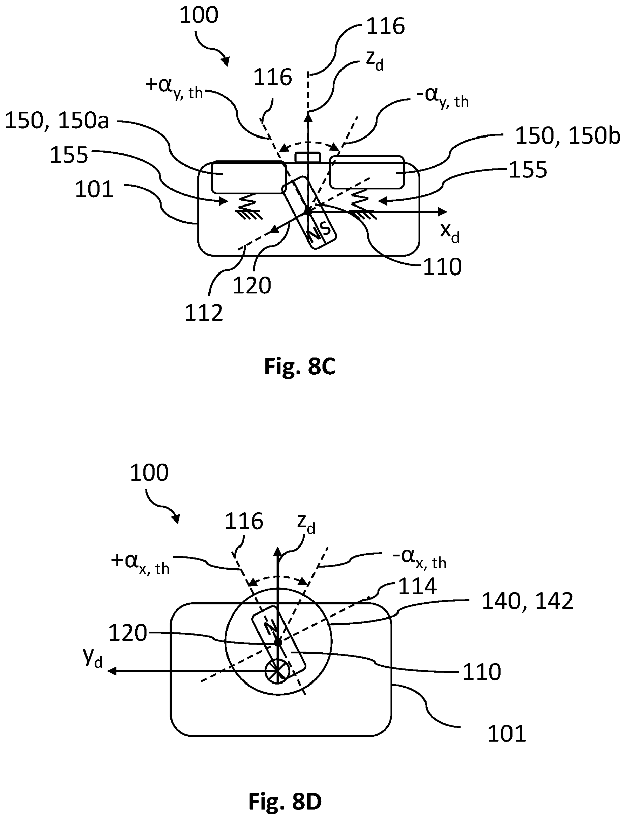

In a fifth arrangement shown in Figs. 8A to 8D, a high control and/or determination accuracy may be achieved based on a click actuation and/or a rotation (i.e., a change in orientation) of the user-borne device 100 relative to the interaction surface 210. In the initial state of the user-borne device 100, the magnetic object 110 may be arranged in the housing 101 such that the first rotation axis 112 may be parallel to the first device axis x_{d}, the second rotation axis 114 may be parallel to the second device axis y_{d}, and the third rotation axis 116 may be parallel to the vertical device axis z_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the third rotation axis 116 relative to the housing 101. In the initial state of the user-borne device 100, the magnetization direction 120 may be parallel to the first device axis x_{d}. An actuation of the at least one click manipulation feature 150 may cause a rotation of the magnetic object 110 with respect to the housing 101 about the second rotation axis 114 by a second rotation angle α_{y}. More specifically, the magnetization direction 120 may be rotated about the second rotation axis 114 by the second rotation angle α_{y}. The user-borne device 100 may be configured to control a click event based on the rotation of the magnetization direction 120 about the second rotation axis 114 by the second rotation angle α_{y}. As the actuation of the at least one click manipulation feature 150 causes a rotation of the magnetization direction 120 about the second rotation axis 114, high accuracy for controlling a click event may be achieved. An actuation of the at least one scroll manipulation feature 140 may cause a rotation of the magnetic object 110 with respect to the housing 101 about the first rotation axis 112 by a first rotation angle αₓ, more specifically wherein the magnetic object 110 may be rotated about the magnetization direction 120 by the first rotation angle αₓ, particularly about the magnetization axis defined by the magnetization direction 120. The rotation axis 112 may be parallel, more specifically, coaxial to the magnetization direction 120. Such a rotation of the of the magnetic object 110 about the first rotation axis 112, more specifically the magnetization direction 120, may be detectable by the plurality of magnetometers due to the orientation of the magnetization direction 120 with respect to the magnetic object 110. A rotation of the user-borne device 100 relative to the interaction surface 210 may lead to a rotation of the magnetization direction 120 relative to the interaction surface 210. As the magnetization direction 120 rotates relatively to the interaction surface 210 based on a change of the user-borne device 110 orientation, a high accuracy in determining the rotation of the user-borne device 110 may be achieved. The user-borne device 100 may be configured to control a scroll event based on the rotation of the magnetic object 110 about the first rotation axis 112 by the first rotation angle αₓ, more specifically about the magnetization direction (120), particularly about the magnetization axis defined by the magnetization direction (120).

In a sixth arrangement shown in Figs. 9A to 9D, a high control and/or determination accuracy may be achieved based on a scroll actuation and/or a rotation (i.e., a change in orientation) of the user-borne device 100 relative to the interaction surface 210. In the initial state of the user-borne device 100, the magnetic object 110 may be arranged in the housing 101 such that the first rotation axis 112 may be parallel to the second device axis y_{d}, the second rotation axis 114 may be parallel to the first device axis x_{d}, and the third rotation axis 116 may be parallel to the vertical device axis z_{d}. A rotation of the user-borne device 100 relative to the interaction surface 210 may be detected based on a rotation of the magnetic object 110 relative to the interaction surface 210. In this embodiment, the magnetic object 110 may be coupled to the housing 101 such that it does not rotate about the third rotation axis 116 relative to the housing 101. In the initial state of the user-borne device 100, the magnetization direction 120 may be parallel to the second device axis y_{d}. An actuation of the at least one scroll manipulation feature 140 may cause a rotation of the magnetic object 110 with respect to the housing 101 about the second rotation axis 114 by a first rotation angle αₓ. More specifically, the magnetization direction 120 may be rotated about the second rotation axis 114 by the first rotation angle αₓ. The user-borne device 100 may be configured to control a scroll event based on the rotation of the magnetization direction 120 about the second rotation axis 116 by the first rotation angle αₓ. As the actuation of the at least one scroll manipulation feature 140 causes a rotation of the magnetization direction 120 about the second rotation axis 114, high accuracy for controlling a scroll event may be achieved. An actuation of the at least one click manipulation feature 150 may cause a rotation of the magnetic object 110 with respect to the housing 101 about the first rotation axis 112 by a second rotation angle α_{y}, more specifically wherein the magnetic object 110 may be rotated about the magnetization direction 120 by the second rotation angle α_{y}, particularly about the the magnetization axis defined by the magnetization direction 120. The rotation axis 112 may be parallel, more specifically coaxial, to the magnetization direction 120. Such a rotation of the magnetic object 110 about first rotation axis 112, more specifically the magnetization direction 120, may be detectable by the plurality of magnetometers 300 due to the orientation of the magnetization direction 120 with respect to the magnetic object 110. A rotation of the user-borne device 100 relative to the interaction surface 210 may lead to a rotation of the magnetization direction 120 relative to the interaction surface 210. As the magnetization direction 120 rotates relatively to the interaction surface 210 based on a change of the user-borne device orientation, a high accuracy in determining the rotation of the user-borne device 100 may be achieved. The user-borne device 100 may be configured to control a click event based on the rotation of the magnetic object 110 about the first rotation axis 112 by the second rotation angle α_{y}, more specifically about the magnetization direction 120, particularly about the magnetization axis defined by the magnetization direction 120.

In embodiments (not shown in the Figs.), a translation of the magnetic object 110 relative to the device coordinate system from an initial location to an actuated location may also be possible. This translation may be based on an actuation of the at least one click manipulation feature 150 and/or the at least one scroll manipulation feature 140 as described above. Although described only for one magnetic object 110, the features described above may analogously apply for more than one magnetic object coupled to or arranged in the housing 101. In an embodiment, more than one magnetic objects may be provided. The magnetic object 110 as described above may be movably coupled with respect to the housing 101. At least one second magnetic object may be fixedly arranged in the housing 101 which may not be translatable and/or rotatable with respect to the user-borne device 100 (and/or the housing 101). The at least one second magnetic object may be configured as described for the magnetic object 110.

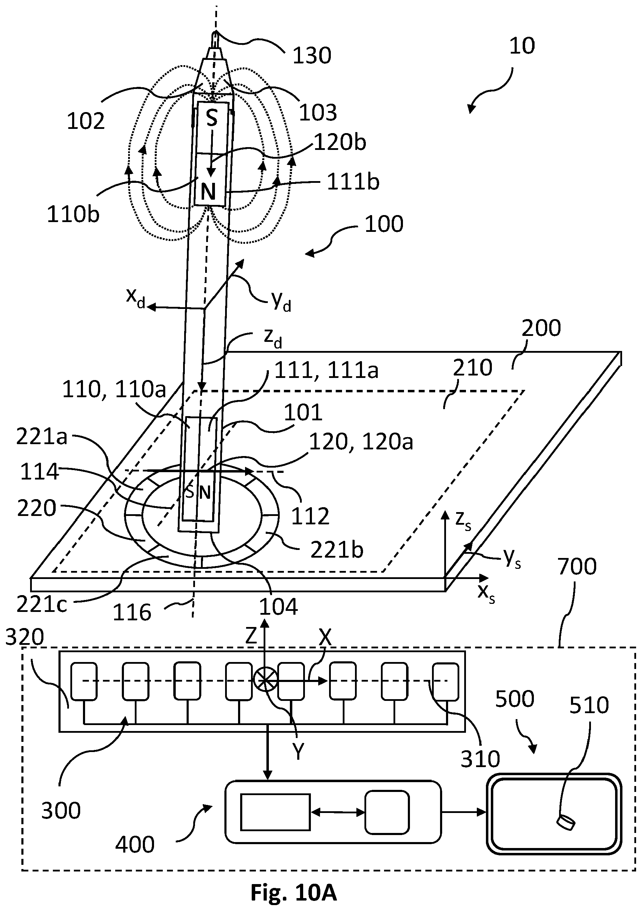

Referring to Figs. 10A to 12, a second embodiment of the user-borne device 100 is shown. In this embodiment, the user-borne device 100 may be writing and/or drawing device, more specifically a stylus, or a brush or a pointer or a writing medium or a finger ring or a toy. The user-borne device 100 may be operable on an interaction surface 210. The user-borne device 100 according to the second embodiment may comprise one or more of the features of the user-borne device 100 as described above with respect to Figs. 1 to 3. Of course, the features of the second embodiment of the user-borne device 100 may also be combinable with the features of the first embodiment of the user-borne device 100 as described above with respect to Figs. 4A to 9D. In an example, the at least one click manipulation feature 150 and/or the at least one scroll manipulation feature 140 may be integrated in the user-borne device according to the second embodiment.

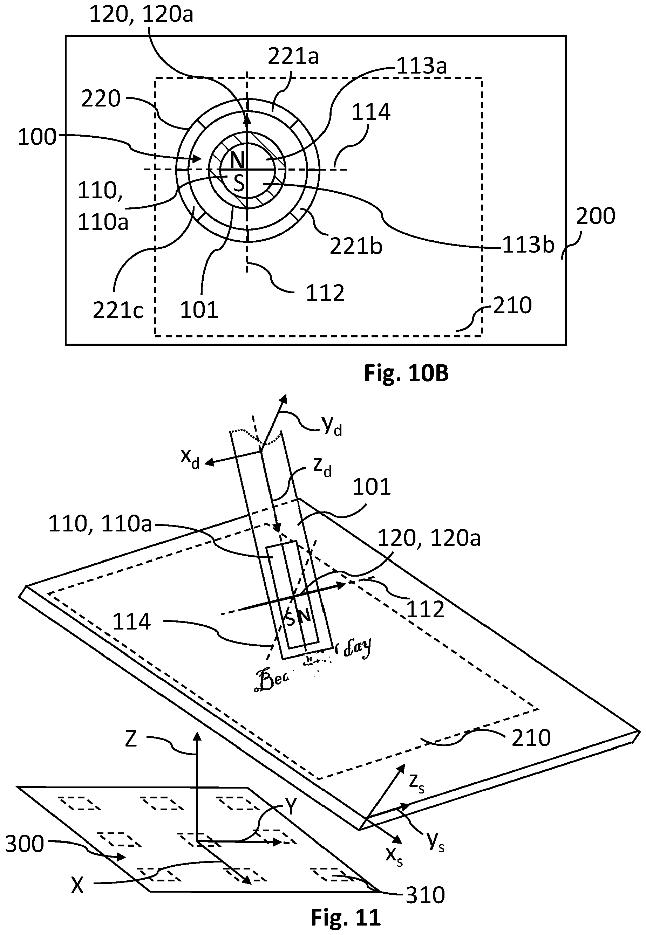

As shown e.g., in Fig. 10A, the magnetic object 110 may be arranged in the housing 101 such that the first rotation axis 112 may be parallel to the first device axis x_{d}, the second rotation axis 114 is parallel to the vertical device axis z_{d}, and the third rotation axis 116 may be parallel to the second device axis y_{d}. The magnetization direction 120 may be parallel to the first device axis x_{d}. In embodiments as shown in Figs. 10A and 10B, the at least one trigger event may be an actual orientation event (as described above), more specifically a selection event, The user-borne device 100 may be configured to control the actual orientation event, more specifically the selection event, based on the rotation of the magnetization direction 120 and/or the user-borne device 100 about the third rotation axis 116. More specifically, the selection event may be controlled by a rotation of the magnetization direction 120 relative to the interaction surface 210. The selection event may be controlled when the magnetization direction 120 is substantially parallel or only slightly inclined with respect to the interaction surface 210. In other words, the selection event may be controlled when the third rotation axis is substantially orthogonal with respect to the interaction surface 210, e.g., when a user holds the stylus orthogonally with respect to the interaction surface 210. However, in some embodiments, the actual orientation event may be controlled when the magnetization direction 120 is inclined or orthogonal with respect to the interaction surface 210.

In some embodiments (not shown in the Figs.), the magnetic object 110 may be arranged in the housing 101 such that the first rotation axis 112 may be parallel to the vertical device axis z_{d}, the second rotation axis 114 may be parallel to the second device axis y_{d}, and the third rotation axis 116 may be parallel to the first device axis x_{d}. The magnetization direction 120 may be parallel to the vertical device axis z_{d}. In this case, the user-borne device 100 may be configured to control the actual orientation event as described above, more specifically the selection event, based on the rotation of the magnetic object 110 and/or the user-borne device 100 about the first rotation axis 112, more specifically about the magnetization direction 120, particularly about a magnetization axis defined by the magnetization direction 120.

The actual orientation event may cause a specific representation of the user-borne device 100 in the digital environment, more specifically a virtual environment, based on the actual orientation of the user-borne device 100. In embodiments, the user-borne device 100 may be a brush. The actual orientation event may trigger a particular writing and/or drawing action based on the actual orientation of the user-borne device 100 relative to the interaction surface 210. For example, individual strokes by a user U may be modeled in the digital environment, more specifically a virtual environment. The exact representation of the individual strokes in the virtual environment may be based on the actual orientation of the user-borne device 100 relative to the reference coordinate system XYZ and/or may be triggered by the actual orientation event. Thus, a user operation of the user-borne device 100, more specifically a brush, may be represented in the virtual environment in at least six degrees of freedom.

As already described above, the at least one trigger event may be caused by a user manipulation of the user-borne device 100 within the sensing volume M. The at least one trigger event may cause an action and/or may be used to control an action in a digital environment, more specifically a virtual environment, based on a user input. More specifically, the at least one trigger event may implement a user input on the user-borne device as an action within a digital environment, more specifically a virtual environment. In comparison to the click event and/or scroll event as defined above, the actual orientation event, e.g., the selection event, may be determined based on a rotation and/or translation of the user-borne device 100 relative to the interaction surface 210 instead of a rotation and/or translation of at least one click manipulation feature 150 and/or at least one scroll manipulation feature 140 relative to user-borne device 100, more specifically the housing 101. The selection event can be used to trigger a selection action, e.g. an attribute selection, a property selection, and/or an object or item selection. In embodiments, the interaction surface 210 may provide a selection area 220. More specifically, the interaction surface 210 may be defined on an output device 500 of an electronics device 700 which may visually display the selection area 220. In the example shown in Fig. 10A, the selection area 220 may be ring-shaped, e.g., a color ring. The selection area 220 may comprise a plurality of selection portions 221a, 221b, 221c. Each selection portion of the plurality of selection portions 221a, 221b, 221c may be associated with a specific attribute and/or selection feature, e.g., a variation of color, brightness, font and so on. Based on a rotation of the magnetization direction 120 about the third rotation axis 116, more specifically within the selection area 220, a specific attribute and/or selection feature associated with the plurality of selection portions 221a, 221b, 221c may be selected. In embodiments, the selection area 220 may be displayed on the interaction surface 220 (e.g., on an output device 500 on which the interaction surface 210 may be defined) when the user-borne device 100 is disposed on a respective area of the interaction surface 210 for a predetermined time. It should be understood that the selection area 220 may have any other configuration and associated features which can be controlled based on a rotation of the magnetization direction 120 as described above.

As indicated in Fig. 11, the at least one trigger event may be a device mode event. More specifically, the user-borne device 100 may be configured to control the device mode event based on the rotation of the magnetization direction 120 and/or the user-borne device 100 about the first rotation axis 112, the second rotation axis 114 and/or the third rotation axis 116. The device mode may be an eraser mode or a drawing mode, more specifically a brush mode. As already mentioned above, the at least one user-borne device 100 may be used together with an electronics device 700. The device mode event may trigger a specific mode that indicates in which way the user-borne device 100 is used together with the electronics device 700. The device mode event may further trigger an action on the electronics device 700 based on the specific device mode. In an example, the device mode may be the eraser mode as mentioned above, wherein the eraser mode event together with the electronic device 700 may trigger an eraser action, such as erasing individual letters, words, phrases, or parts of drawings. In other examples, the device mode may be a writing and/or drawing mode, wherein the associated writing and/or drawing mode event may trigger a drawing and/or writing action together with the electronics device 700. In some embodiments, the device mode may be a drawing mode, more specifically a brush mode, and the user-borne device 100 may be a brush. Based on a rotation of magnetic object 110 and/or the user-borne device 100 about the first rotation axis 112, the rotation axis 114 and/or the third rotation axis 116, a drawing mode event may trigger a drawing action together with the electronics device 700. Based on a detection of the magnetic object 110 relative to an interaction surface 210 (more specifically of a position and/or an orientation of the magnetic object 110 relative to the interaction surface 210), the drawing mode may be adapted. However, other device mode events may also be possible. A determination, an activation and/or a deactivation of the device mode event may be described in detail below. A combination of the device mode event and the actual orientation event may also be possible.

In the second embodiment of the user-borne device 100, the housing 101 may have a longitudinal and/or cylindrical shape. The vertical device axis z_{d} and/or the third rotation axis 116 may extend in the longitudinal direction of the housing 101. As indicated in Figs. 10A and 12, the housing 101 may comprise a first end 103. The housing 101 may comprise a second end 104 on an opposite side of the housing 101 with respect to the first end 103. The housing 101 may comprise a tip portion 102 at the first end 103, more specifically wherein the second end 104 may be on an opposite side of the housing 101 with respect to the tip portion 102. The tip portion 102 may be adapted for a writing and/or drawing in a user operation within the sensing volume M. In an embodiment, the tip portion 102 may be in contact with or in proximity to the interaction surface 210, more specifically with contact point or surface 130. As shown in Figs. 10A to 12, the magnetic object 110 may be arranged proximate the second end 104. The magnetic object 110 is fixedly coupled to the housing 101 and/or arranged within the housing 101.

Referring to Figs. 10A and 12, the magnetic object 110 may be a first magnetic object 110a and the magnetization direction 110 may be a first magnetization direction 110a. The user-borne device 100 comprises a second magnetic object 110b having a second magnetization direction 120b. In other embodiments, the user-borne device 100 may comprise more than two magnetic objects. The second magnetic object 110b may be arranged proximate the first end 103. The longitudinal body 111 may be a first longitudinal body 111a. The second magnetic object 110a may comprise a second longitudinal body 111b extending along the vertical device axis z_{d}. In embodiments, the second magnetic object 110b may comprise a second magnetization direction 120b which may be substantially parallel, more specifically parallel, to the vertical device axis z_{d}. In an embodiment, the second magnetization direction 120b may be substantially parallel to the third rotation axis 116. Thus, the second magnetization direction 120b may be substantially orthogonal to the first magnetization direction 120a. Alternatively, the second magnetization direction 120b may be substantially parallel to the first rotation axis 112 (not shown in the Figs.). In this case, the second magnetization direction 120b may be substantially parallel to the first magnetization direction 120a. In embodiments, the second longitudinal body 111b may have a cylindrical shape, or a cuboid shape. The second magnetic object 120b may be axially magnetized, as indicated by the arrangements of north pole and south pole in Figs. 10A and 12.

The magnetic field 115 created by the first magnetic object 110a may be a first magnetic field. The second magnetic object 110b may be configured to create a second magnetic field, more specifically wherein the second magnetic field may be rotationally symmetric, particularly with respect to the third rotation axis 116 and/or the vertical device axis z_{d}. The second magnetic object 110 may be a permanent magnet as described in more detail above. The second magnetic object 110b may be fixedly coupled to the housing 101.

Referring to Fig. 10A, only the first magnetic field may be measurable by the plurality of magnetometers 300, when, during a user operation, the second end 104 of the user-borne device 100 is held by a user U in proximity to the interaction surface 210. In this case, the second end 104 may be distal to the interaction surface 210. As outlined above, the plurality of magnetometers 300 may be configured to create a sensing volume M. Only the first magnetic field may be measurable within the sensing volume M when the second end 104 of the user-borne device 100 is in proximity to an interaction surface 210. In this case, the second magnetic field may be outside the sensing volume M and may not be measurable by the plurality of magnetometers 300. In this case, the actual orientation event, more specifically the selection event, and/or the device mode event may be enabled. In other embodiments, during a user operation, the first end 103 may be in proximity to the interaction surface 210 and the second end 104 may be distal to the interaction surface 210. In this case only the second magnetic field may be measurable. In this case, the device mode may be a writing and/or drawing mode which may be enabled. A writing and/or drawing mode may be the mode, wherein a user holds the user-borne device 100 at an inclination angle θ with respect to the interaction surface 210 for drawing and/or writing on the interaction surface 210.

The first and/or second embodiment of the user-borne device 100 as described above may comprise a tactile and/or audible feedback device (not shown in the Figs.). The tactile and/or audible feedback device may be configured to provide a tactile and/or audible feedback to a user U based on a control of at least one trigger event. In the first embodiment of the user-borne device 100, the tactile and/or audible feedback device may provide a tactile and/or audible feedback to a user U based on an actuation of the at least one click manipulation feature 150 and/or the at least one scroll manipulation feature 140. In the second embodiment of the user-borne device 100, the tactile and/or audible feedback device may provide a tactile and/or audible feedback to a user U based on the rotation of the magnetization direction 120 and/or the user-borne device 100 about the third rotation axis 116. As outlined above, combinations of the first and second embodiments of the user-borne device 100 may also be possible.

According to a second aspect of the present disclosure, a system 10 for determining a manipulation of a user-borne device 100 by a user U is provided. Some embodiments of the system 10 are illustrated in Figs. 1 and 10 to 12. The system 10 comprises a user-borne device 100 according to the first aspect of the present disclosure. The user-borne device 10 may comprise any of the above-described embodiments and/or features. The 10 system comprises a plurality of magnetometers 300. The plurality of magnetometers 300 is configured to measure the magnetic field created by the magnetic object 110. More specifically, the system 10 may be configured to detect a rotation of the magnetic object 110 about the first rotation axis 112, the second rotation axis 114 and the third rotation axis 116 based on the magnetic field measurements. The system 10 may be configured to determine the at least one trigger event based on a rotation of the magnetic object 110 about the first rotation axis 112, the second rotation axis 114 and/or the third rotation axis 116. Particularly, the system 10 may configured to detect a rotation of the magnetic object 110 about the magnetization direction 120 based on the magnetic field measurements with the plurality of magnetometers 300. Such a system 10 may allow the tracking and/or location determination of a user-borne device 100, more specifically an electronically and/or electrically user-borne device 100, in at least six degrees of freedom with only one magnetic object 110, since based on its magnetization direction orientation, a rotation of the magnetic object 110 about three axes can be detected within a sensing volume created by the plurality of magnetometers 300. Thereby, tracking and/or location determination of the magnetic object 110 and/or the user-borne device 100 may be improved, more specifically e.g., without providing additional magnetic objects. Furthermore, additional functions can be integrated in the user-borne device 100 and application fields of the user-borne device 100 and the system 10 can be extended. At least one trigger event (e.g., associated with the additional functions) can be controlled by the user-borne device 100 and/or detected by the system 10 in an improved manner, as it may be associated with the detectable rotation about three axes, and more specifically about a magnetization axis defined by the magnetization direction 210. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

The plurality of magnetometers 300 may be configured to create a sensing volume M (as indicated, e.g., in Fig. 1). The sensing volume may have an ellipsoidal form. The plurality of magnetometers 300 may be associated with a magnetometer plane 310. More specifically, the magnetometer plane 310 may be defined by a plane that may extend through a majority of the plurality of magnetometers 300. In some embodiments, the user-borne device 100 may be operable on an interaction surface 210, more specifically wherein the interaction surface 210 may be defined within the sensing volume M.

As indicated, e.g., in Fig. 1, the system 10 may comprise a reference coordinate system XYZ, which may be defined relative to the plurality of magnetometers 300. The reference coordinate system XYZ may comprise a first reference axis X, a second reference axis Y and a vertical reference axis Z. The first reference axis X and the second reference axis Y may be orthogonal with respect to each other. The vertical reference axis Z may be orthogonal to the first reference axis X and the second reference axis Y. The vertical reference axis Z may extend through a center of the plurality of magnetometers 300. In embodiments, the first reference axis X and the second reference axis Y may be defined on a magnetometer plane 310. The magnetometer plane 310 may be defined by a plane that extends through a majority of the plurality of magnetometers 300. The vertical reference axis Z may be orthogonal to the magnetometer plane 310.

As outlined above, the plurality of magnetometers 300 may be configured to measure a magnetic field associated with the magnetic object 110. As outlined above, each magnetometer of the plurality of magnetometers 300 may be configured to measure the magnetic field associated with the magnetic object 110 in the direction of the first reference axis X, the second reference axis Y, and/or the vertical reference axis Z. In other words, each magnetometer of the plurality of magnetometers 300 may be configured to perform magnetic field measurements in the direction of one axis (i.e., one dimension), two axes (i.e., two dimensions), or three axes (i.e., three dimensions). The number of magnetometers provided may depend on the size of the interaction surface 210, on which the user-borne device 100 is operated, or, on the desired size of the sensing volume M within which the user-borne device 100 is operated. The plurality of magnetometers 300 may be configured to collect magnetic field measurements associated with the magnetic object 110 within the sensing volume M up to a maximum measurement distance. In embodiments, the maximum measurement distance may be 18cm, more specifically 15cm. In embodiments, the maximum measurement distance may be defined between a furthest point on the interaction surface 210 or within the sensing volume M to a closest magnetometer of the plurality of magnetometers 300.

The plurality of magnetometers 300 may be fixedly arranged in a magnetometer body 320 (see, e.g., Fig. 12) defining a fixed position and/or orientation of the plurality of magnetometers 300 with respect to each other. The magnetometer plane 310 may be defined by a plane that extends through a majority of the plurality of magnetometers 300. More specifically, the magnetometer plane 310 may extend through centers, more specifically geometric centers, of a majority of the plurality of magnetometers 300. In other words, most of the magnetometers of the plurality of magnetometers 300 may be arranged in a common plane, i.e., the magnetometer plane 310. However, one or more magnetometers of the plurality of magnetometers 300 may be distanced and/or inclined with respect to the common plane, e.g., due to manufacturing issues and/or tolerances. The magnetometer plane 310 may additionally or alternatively be defined by a plane in which the magnetometers of the plurality of magnetometers 300 are predominantly arranged.

Referring to Fig. 13, an arrangement of the plurality of magnetometers 300 with respect to the interaction surface 210 defined on an interaction support 200 is shown. In the embodiment shown in Fig. 13, the plurality of magnetometers 300 may be arranged in rows and columns. However, it is also possible that the plurality of magnetometers may be arranged in an unordered manner within the magnetometer body 320. A calibration procedure may be used to determine the exact locations and measurement axes of each magnetometer within the magnetometer body 320 relative to the reference coordinate system XYZ. The plurality of magnetometers 300 are shown in Fig. 13 as being arranged in the magnetometer plane 310 (i.e., in the same plane relative to the vertical reference axis Z). However, as outlined above, one or more of the magnetometers may be distanced to the magnetometer plane 310, more specifically distanced in the direction of the vertical reference axis Z.

In the arrangement of Fig. 11, the plurality of magnetometers 300 may be arranged in the magnetometer body 320 in rows k und columns l. Fig. 13 illustrates some magnetometers S_{k,l} of the plurality of magnetometers 300. Each magnetometer S_{k,l} may comprise a vertical magnetometer axis z_{M} which may be arranged on the intersections of the rows k and columns l. Adjacent magnetometers S_{k,l}, S_{k,l+1}, S_{k,l-1} may be separated along a row k by a distance d_{l,l+1} and di,i-i. Adjacent magnetometers S_{k,l}, S_{k+1,l}, S_{k-1,l} may be separated along a column l by a distance d_{k,k+1} and d_{k,k-1}. As outlined above, the distances dₖ, dₗ between the respective magnetometers S_{k,l} may be equal or may differ.

As indicated in Figs. 1, 10A and 12, the system 10 may further comprise or be connectable to a processing unit 400. The system 10, more specifically the processing unit 400, may be configured to track a movement of the magnetic object 110 and/or the user-borne device 100 in at least six degrees of freedom. The at least six degrees of freedom may include a translation of the magnetic object 110 along the first reference axis X, the second reference axis Y and the vertical reference axis Z, a rotation about the first rotation axis 112, a rotation about the second rotation axis 114 and a rotation about the third rotation axis 116. In case the user-borne device 100 is operated on an interaction surface 210, the system 10 may be configured to assume a contact between the user-borne device 100 and the interaction surface 210. This may be done based on the determined user-borne device location and the interaction surface location as described in the method below. During a user operation, the system 10 may be configured to track a movement of the user-borne device 100 within the sensing volume M and/or relative to the interaction surface 210 over a time period. More specifically the system 10 may be configured to determine a trajectory of the user-borne device 100 within the sensing volume M and/or relative to the interaction surface 210. In embodiments, the user-borne device 100 may be tracked over a time period comprising multiple time samples. At each time sample, the location of the user-borne device 100 within the sensing volume M and/or relative to the interaction surface 210 may be determined.

The system 10, more specifically the processing unit 400, may be configured to determine the at least one trigger event as described in detail above. The at least one trigger event may be determined based on a control of the user-borne device 100 (e.g., a manipulation of the user-borne device by a user). As described for the first embodiment of the user-borne device 100, the at least one trigger event may be a click event and/or a scroll event and/or an actual orientation event. As described for the second embodiment of the user-borne device 100, the at least one trigger event may be an actual orientation event, more specifically a selection event, and/or a device mode event. However, combinations of the embodiments may also be possible.

The system 10 may be configured to determine the scroll event and/or the click event based on determining an actuation of the at least one scroll manipulation feature 140 and/or at least one click manipulation feature 150 by a user U, more specifically wherein the magnetic object 110 may be rotated about the first rotation axis 112, the second rotation axis 114 and/or the third rotation axis 116.

The system 10 may be configured to determine the actual orientation event, more specifically the selection event, based on determining a rotation of the magnetic object 110 and/or the user-borne device 100 about the third rotation axis 116 relative to the interaction surface 210. More specifically, in this case the magnetic object 110 may be fixedly coupled to the user-borne device 100.

The system 10 may be configured to detect that the second end 104 and/or the first magnetic object 110a is in proximity to the interaction surface 210. More specifically, the detection may be based on an orientation of the first magnetic field associated with the first magnetization direction 120a relative to the plurality of magnetometers 300. Referring to the embodiment in Fig. 11, the system 10 may be configured to determine and activate the device mode event in response to detecting that the second end 104 and/or the first magnetic object 110a is in proximity to the interaction surface 210. More specifically, in this case only the first magnetic object 110a may be within a sensing volume M generated by the plurality of magnetometers 300. In other words, and as described above, when the second end 104 and/or the first magnetic object 110a is proximate to the interaction surface 210, the second magnetic object 110b may not be in the sensing volume M and only the first magnetic object 110a may be detected. Based on the detection, the system 10 may be configured to activate the device mode. In all embodiments described herein, the device mode may be an eraser mode. An eraser mode may be a mode by which, for example, letters and/or sentences that are visually displayed on an output device 500 can be virtually erased. In other embodiments, the detection as described may not activate an eraser mode but a drawing mode, more specifically a brush mode as mentioned above. The brush mode may represent a brush, e.g., a brush with an asymmetrical texture. In this case, the device mode may be a drawing mode. The drawing mode may be provided as a brush which may have a modified behavior depending on the angle of the user-borne device 100 and/or of the magnetic object 110 relative to the interaction surface 210. In examples, the associated event with a drawing mode may comprise a reproduction of a bevelled felt or a "calame".

In some embodiments, the system 10 may be configured to detect that the first end 103 and/or the second magnetic object 110b may be in proximity to the interaction surface 210, more specifically wherein the detection may be based on an orientation of the second magnetic field associated with the second magnetization direction 120b relative to the plurality of magnetometers 300. The system 10 may be configured to determine and/or deactivate the device mode event in response to detecting that the first end 103 and/or the second magnetic object 110b is in proximity to the interaction surface 210. In this case only the second magnetic object 110b may be within a sensing volume M generated by the plurality of magnetometers 300. In some embodiments, the system may be configured to detect that the user-borne device 100 is turned, more specifically when the first magnetic object 110a is moved out of the sensing volume M by a user U. In more detail, when the first end 103 and/or the second magnetic object 110b is proximate to the interaction surface 210, the first magnetic object 110b may not be in the sensing volume M and only the second magnetic object 110b may be detected. In an example, based on the detection, the eraser mode may be deactivated and a writing and/or drawing mode of the user-borne device 100 may be activated.

As mentioned above, the system 10 may be configured to determine a location of the user-borne device 100 within a sensing volume created by the plurality of magnetometers 300 and/or relative to the interaction surface 210 based on the magnetic field measurements. More specifically, the system 10 may be configured to assume a contact location of the user-borne device 100 relative to the interaction surface 210, as will be described in detail in the method 600 below.

Referring to Figs. 1, 10A and 12, the system 10 may comprise at least one output device 500. The at least one output device 500 may be configured to represent, more specifically to visually reproduce, the user-borne device 100 as a virtual object. In the embodiment shown in Fig. 1, the system 10 may comprise one output device 510. In embodiments, the output device 500 may be a visual screen or display. The system 10 may be configured to reproduce a movement of the user-borne device 100 within the sensing volume M and/or on the interaction surface 210 as a movement of the virtual object on the at least one output device 500. Furthermore, the system 10 may be configured to visually reproduce the at least one trigger event on the output device 500.

The system 10 may comprise an electronics device 700. The at least one output device 500 may be integrated in the electronics device 700. In embodiments, the electronics device 700 may be a tablet, a cell phone, a laptop, a computer, a virtual reality (VR) set or a television. In embodiments, the processing unit 400 may be integrated in the electronics device 700. Furthermore, the electronics device 700 may comprise a user interface configured to interact with a user U and/or receive a user input. In an embodiment, the user interface may be integrated into the at least one output device 500. The plurality of magnetometers 300 may be configured to receive data from and/or transmit data to the processing unit 400. The system 10 may comprise a data storage connected to the processing unit 400. The data storage may comprise a primary data storage, e.g., a RAM, and a secondary data storage. The data storage may be integrated in and/or connected to the electronics device 700.

As indicated in Figs. 1 and 10A to 12, the system 10 may comprise an interaction support 200 having an interaction support surface 230. The interaction surface 210 may be at least a partial surface of the interaction support surface 230. The interaction support 200 may not comprise ferromagnetic properties, e.g., ferromagnetic particles. In embodiments, the interaction support 200 may be a furniture (e.g., a table), a notebook, an electronics device 700, a screen, a wall, or a mouse pad. The interaction surface 210 may be defined based on a first set of geometric parameters associated with the interaction support 200. More specifically, the type of interaction support 200 may be known, e.g., a notebook or mouse pad. Such an interaction support 200 may be defined by a set of predefined geometric parameters. A partial surface of the interaction support surface 230 may be used as interaction surface 210.

The plurality of magnetometers 300 may be electrically (e.g., via wires or a data bus) or wirelessly connected to the processing unit 400, the external processing unit and/or to the electronics device 700. In embodiments, the plurality of magnetometers 300 may be integrated in a wall, a furniture, a notebook, an electronics device 700, a screen, a keyboard, and/or a mouse pad. In case the plurality of magnetometers 300 is arranged in a wall, the interaction surface 210 may be a screen or display placed in front of the plurality of magnetometers 300. In embodiments, the interaction surface 210 may be defined on the at least one output device 500.

As outlined above, the user-borne device 100 is configured to control at least one trigger event based on a rotation of the magnetic object 110 about the first rotation axis 112, the second rotation axis 114 and/or the third rotation axis 116. More specifically, the at least one trigger event may cause an action and/or may be used to control an action in a digital environment, more specifically a virtual environment, based on a user input. Furthermore, the user-borne device 100 according to the above aspects of the present disclosure may be reproduced as a virtual object in the virtual environment. The electronics device 700 may be a VR set, more specifically an XR headset which may be a device worn on a user's head and configured to allow a user to experience virtual environments in real life (virtual reality environment, or VR environment). In an embodiment, the user-borne device 100 may be reproduced as a virtual object in the VR environment allowing a user U to recognize where the user-borne device 100 is located. A plurality of magnetometers 300 may be provided creating a sensing volume M in which the user-borne device 100 is operated. The user-borne device location (see, e.g., as described above and/or with respect to the method below) may be indicative of an orientation and/or a position of the user borne device 100 relative to the reference coordinate system XYZ, more specifically to the plurality of magnetometers 300. The reference coordinate system XYZ may be fixed in the VR environment. A position and/or an orientation of the user-borne device 100 may be computed relative to the VR set, more specifically to the XR headset, and may be reproduced, particularly displayed, to the user via the XR headset. In some embodiments, the reference coordinate system XYZ may be dynamically evaluated from a tracking of the VR environment of the XR headset. In embodiments, it may be possible to provide an additional tracking system being fixed to the plurality of magnetometer 300 such as IR tracking, electromagnetic tracking or camera-based tracking. The at least one trigger event (e.g., the click event or scroll event) and the caused action may also be represented in the VR environment, more specifically which may be displayed to a user U via a display arranged in the XR headset. The representation in the VR environment may be done by changing a rendering parameter of the user-borne device 100, for instance color or light, and/or adding a specific sound. In some embodiments, the interaction surface 210 may be modeled in the VR environment, displayed to a user via the XR headset and/or used as an input to represent an interaction between the user-borne device 100 and the interaction surface 210 within the VR environment (e.g., representing the user-borne device 100 being operated on the interaction surface 210 within the VR environment).

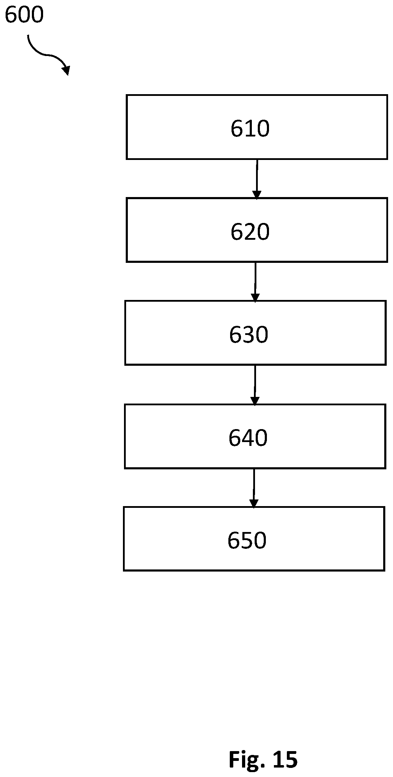

According to a third aspect of the present disclosure, a method 600 for determining a manipulation of a user-borne device 100 by a user U is provided. Fig. 15 illustrates a process flow diagram of the method 600. The method 600 may comprise obtaining magnetic field measurements (610) associated with a magnetic field created by a magnetic object 110 and measured with a plurality of magnetometers 300. The magnetic object 110 is coupled to a user-borne device 100 and the magnetic object 110 comprises a magnetization direction 120 being at an orientation with respect to the magnetic object 110. Furthermore, the method 600 comprises detecting a rotation 630 of the magnetic object 110 about a first rotation axis 112, a second rotation axis 114 and a third rotation axis 116 based on the obtained magnetic field measurements. The first rotation axis 112, the second rotation axis 114 and the third rotation axis 116 are orthogonal with respect to each other. In addition, the method comprises determining at least one trigger event 640 based on the detected rotation. Such a method may allow the tracking and/or location determination of a user-borne device, more specifically an electronically and/or electrically user-borne device, in at least six degrees of freedom with only one magnetic object, since based on its magnetization direction orientation, a rotation of the magnetic object about three axes can be detected within a sensing volume created by the plurality of magnetometers. Thereby, tracking and/or location determination of the magnetic object and/or the user-borne device may be improved, more specifically e.g., without providing additional magnetic objects. Furthermore, additional functions can be integrated in the user-borne device and application fields of the user-borne device and the system can be extended. At least one trigger event (e.g., associated with the additional functions) can be controlled by the user-borne device and/or detected by the system in an improved manner, as it may be associated with the detectable rotation about three axes. Additionally, manufacturing costs can be reduced although the control of more trigger events is enabled, since additional magnetic objects may not have to be provided to enable the same functions as the only one magnetic object comprising a magnetization direction oriented such that a rotation about three axes is detectable.

In embodiments, detecting a rotation 630 may comprise detecting a rotation of the magnetic object 110 about the magnetization direction 120 based on the obtained magnetic field measurements associated with the orientation of the magnetization direction 120 with respect to the magnetic object 110.

Determining at least one trigger event 640 may comprises determining a manipulation of the user-borne device 100, more specifically a control of the user-borne device 100, within a sensing volume M created by the plurality of magnetometers 300 based on the detected rotation.

Determining at least one trigger event 640 may further comprise associating the manipulation with the at least one trigger event.

In embodiments, the user-borne device 100 may be configured according to the first embodiment as described above for the first aspect of the present disclosure. As already mentioned, the user-borne device 100 may comprise at least one scroll manipulation feature 140 and/or at least one click manipulation feature 150 operationally coupled to the magnetic object 110 and movably coupled to a housing 101 of the user-borne device 100. The magnetic object 110 may be movably coupled to the housing 101. Determining at least one trigger event 640 may comprise determining a click event based on detecting a rotation of the magnetic object 110 relative to the housing 101 due to an actuation of the at least one click manipulation feature 150. Additionally or alternatively, determining at least one trigger event 640 may comprise determining a scroll event based on a detected rotation of the magnetic object 110 relative to the housing 101 due to an actuation of the at least one scroll manipulation feature 140. In some embodiments, the method 600 may comprise determining an actual orientation event based on detecting a rotation of the magnetic object 110 relative to the housing 101 due to a rotation of the magnetic object 110 within the sensing volume M.

In some embodiments, the user-borne device 100 may be configured according to the second embodiment as described above in the first aspect of the present disclosure. As already described, the user-borne device 100 may be operable on an interaction surface 210 and the magnetic object 110 may be fixedly coupled to the user-borne device 100. The magnetic object 110 may be a first magnetic object 110a and the magnetization direction 110 may be a first magnetization direction 110a. The user-borne device 100 may comprise a second magnetic object 110b having a second magnetization direction 120b. Determining at least one trigger event 640 may comprise determining an actual orientation event, more specifically a selection event, based on a detected rotation of the magnetic object 110 about the third rotation axis 116 relative to the interaction surface 210. In some embodiments, the selection event may only be determined in case the first magnetization direction 110 may be substantially parallel and/or or only slightly inclined with respect to the interaction surface 210. In other words, in this case, the third rotation axis 116 of the user-borne device may be substantially orthogonal to the interaction surface 210. In embodiments, determining at least one trigger event 640 may comprise detecting that the first magnetic object 110a is in proximity to the interaction surface 210 based on an orientation of the first magnetization direction 110a and an associated first magnetic field relative to the interaction surface 210. Alternatively, determining at least one trigger event 640 may comprise detecting that the second magnetic object 110b is in proximity to the interaction surface 210 based on an orientation of the second magnetization direction 110b and an associated second magnetic field relative to the interaction surface 210. In embodiments, determining at least one trigger event 640 may comprise determining a device mode event in response to detecting that the first magnetic object 110a is in proximity to the interaction surface 210 and activating the device mode event in response to determining the device mode event, or deactivating the device mode event in response to detecting that the second magnetic object 110b is in proximity to the interaction surface 210.

The method 600 may further comprise determining a user-borne device location 620 within the sensing volume M created by the plurality of magnetometers 300 and based on the obtained magnetic field measurements. More specifically, detecting the rotation 630 may be based on determining the user-borne device location 620. The method 600 may comprise defining the reference coordinate system XYZ as described above.

Determining a user-borne device location 620 may comprise determining an absolute magnetic object location indicative of an absolute magnetic object position and/or an absolute magnetic object orientation of the magnetic object 110 relative to the reference coordinate system XYZ. More specifically, the absolute magnetic object location may be determined based on the obtained magnetic field measurements. The absolute magnetic object location may comprise an absolute magnetic object position and/or an absolute magnetic object orientation relative to the reference coordinate system XYZ. More specifically, the absolute magnetic object location may be determined based on the obtained magnetic field measurements. In embodiments, determining an absolute magnetic object location may comprise generating magnetic field measurement data based on the obtained magnetic field measurements. The magnetic field measurement data may be indicative of a magnetic field position, a magnetic field orientation and/or a magnetic field strength relative to the reference coordinate system XYZ. Determining an absolute magnetic object location may further comprise processing magnetic field measurement data to relate magnetic field measurement data to an absolute magnetic object location (i.e., the absolute magnetic object location as described above). The magnetic object 110 may comprise the magnetization direction 120 as described in detail above. The magnetic object 110 may create a magnetic field which is rotationally asymmetric. A rotation about the magnetization direction 120 may be detectable. The absolute magnetic object location may be determined based on an implementation of a mathematical model associating each measurement of a magnetometer of the plurality of magnetometers 300 with a location of the magnetic object 110 in the reference coordinate system XYZ. Each magnetometer of the plurality of magnetometers 300 may be a vector magnetometer and may be configured to measure the magnetic field in one, two or three dimensions. In an embodiment, a coulombian model may be implemented, which may allow a modeling of complex magnetizations of the magnetic object 110. Detecting a rotation 630 may be based on the absolute magnetic object orientation.

Determining a user-borne device location 620 may further comprise determining a relative magnetic object location indicative of a relative magnetic object position and/or a relative magnetic object orientation of the magnetic object relative to the user-borne device 100, more specifically to a device coordinate system as described above. The relative magnetic object location may comprise a relative magnetic object position and/or a relative magnetic object orientation relative to the device coordinate system. Detecting a rotation 630 may be based on the relative magnetic object orientation. Determining a relative magnetic object location may be based on the absolute magnetic object location as described above and a first set of geometric parameters. The first set of geometric parameters may comprise predefined geometric parameters indicative of a geometric position and a geometric orientation of the magnetic object 100 relative to the user-borne device 100, more specifically in an initial state of the user-borne device 100 (the initial state is described above). In other words, based on the determined absolute location of the magnetic object 110 and the knowledge of the arrangement of the magnetic object 110 within the user-borne device 100 (more specifically relative to the device coordinate system), the user-borne device location may be known.

In embodiments, the method 600 may further comprise applying a filter for filtering the determined user-borne device location. Magnetic and electronic noise, as well as environmental variations may lead to non-smooth location determinations over time. Based on the filtering, a smooth location trajectory of the user-borne device 100 relative to the reference coordinate system XYZ and/or to interaction surface 210 may be achieved. The filter may be a low-pass filter or a Kalman filter, more specifically an extended Kalman filter or an unscented Kalman filter.

With respect to the first embodiment of the user-borne device 100, detecting a rotation 630 may comprise detecting a position and/or orientation deviation of the relative magnetic object orientation caused by translation and/or rotation of the magnetic object 110 relative to the user-borne device 100, more specifically wherein the user-borne device 100 may be in an actuated state. This may be the case, when the at least one click manipulation feature 150 and/or the at least one scroll manipulation feature 140 is actuated by a user U, as the magnetic object 110 may be operationally coupled to the at least one click manipulation feature 150 and/or the at least one scroll manipulation feature 140. As mentioned above, the device coordinate system may be defined in a geometric center of the user-borne device 100. In the initial state, the magnetic object 110 may be in an initial location, e.g., inclined and/or distanced with respect to the device coordinate system and/or to the geometric center of the user-borne device 100. The user-borne device 100 may be in an actuated state, when the magnetic object 110 is in an actuated location relative to the initial location (and/or relative to the user-borne device 100 and/or to the housing 101). In other words, the user-borne device 100 may be in an actuated state, when the magnetic object 110 is rotated from the initial location. In the actuated state, the magnetic object orientation and/or the magnetic object position of the magnetic object 110 relative to the device coordinate system may be different compared to the initial state. As outlined above, the method 600 may comprise, in response to detecting the position and/or orientation deviation, determining the at least one trigger event, more specifically associated with the position and/or the orientation deviation. Based on the detected specific translation and/or rotation, the method 600 may comprise transforming the detected position and/or orientation deviation to the at least one trigger event associated with the respective translation and/or rotation. In an example, the method 600 may obtain data from a database. The database may comprise data associating at least one trigger event with a specific translation and/or rotation of the magnetic object 110 from the initial location to the actuated location. In an example, the click event and/or the scroll event may be determined by detecting the rotation about the first rotation axis 112, the second rotation axis 114 and/or the third rotation axis 116 of the magnetic object 110 relative to the user-borne device 100, and associating the respective rotation with the respective trigger event.

The method 600 may further comprise initializing the plurality of magnetometers 300 and the user-borne device 100, more specifically when a user U starts a user operation. In embodiments, the user-borne device 100 and/or the magnetic object 110 may be tracked over a time period comprising multiple time samples. At each time sample, the method 600 may comprise determining the user-borne device location 620 and/or detecting the rotation 630 and/or determining the at least one trigger event. More specifically, detecting a rotation 630 may be performed by the method 600 over a time period comprising multiple time samples. At each time sample, the method 600 may comprise detecting a rotation 630 of the magnetic object 110 about the first rotation axis 112, the second rotation axis 114 and the third rotation axis 116. The method may further comprise storing the determined and/or detected features for each time sample.

As outlined above, in some embodiments the user-borne device 100 may be operable on an interaction surface 210, more specifically defined within the sensing volume M (see, e.g., Figs. 10A to 12). The method 600 may comprise determining an interaction surface location, wherein the interaction surface location may be indicative of an interaction surface position, an interaction surface orientation and/or an interaction surface distance relative to the reference coordinate system XYZ, more specifically to the magnetometer plane 310. Determining the interaction surface location may be based on obtaining interaction surface location data defining a geometric position and/or a geometric location of the interaction surface 210 relative to the reference coordinate system XYZ. The method 600 may comprise determining the user-borne device location 620 relative to the interaction surface 210 based on the interaction surface location. The method 600 may further comprise assuming a contact location of the user-borne device 100 relative to the interaction surface 210, more specifically based on the determined user-borne device location and the determined interaction surface location.

The method 600 may further comprise representing 650 the user-borne device 100 and/or the magnetic object 110 on an output device 500. More specifically, representing 650 the user-borne device 100 on an output device 500 may comprise reproducing the user-borne device 100 as a virtual object on the output device 500. In embodiments, the user-borne device 100 and/or the magnetic object 110 may be visually reproduced as a virtual object. In embodiments, the at least one output device 500 may be configured to visually reproduce the virtual object. Representing 650 the user-borne device 100 may further comprise reproducing a movement of the user-borne device 100 and/or the magnetic object 110 within the sensing volume M and/or relative to the interaction surface 210 as a movement of the virtual object on the output device 500. The movement of the user-borne device 100 within the sensing volume M may be caused by a manipulation of the user-borne device 100 during a user operation (i.e., by a user manipulating the location of the user-borne device 100 and/or the magnetic object 110). In other words, the movement of the user-borne location may be determined and reproduced as a movement of the virtual object on the output device 500. The visual reproduction may be a motion of a cursor on the output device 500. In embodiments, the visual reproduction may not be identical to the design of the user-borne device 100 but may be any icon (e.g., an arrow, a picture).

In an embodiment, the method 600 may comprise rotating the magnetic object 110 about the first rotation axis 112, the second rotation axis 114 and/or the third rotation axis 116 to generate the at least one trigger event. This may be done based on a manipulation of the magnetic object 110 and/or the user-borne device 100 within the sensing volume M, e.g., based on an actuation of the at least one click manipulation feature 150 and/or of the scroll manipulation feature 140.

The method 600 as described above (except for the paragraph above), may be a computer-implemented method. According to an aspect of the present disclosure, a computer system may be configured to execute the computer-implemented method 600 as described above. According to another aspect of the present disclosure a computer program may be configured to execute the computer-implemented method 600 as described above. Furthermore, a computer-readable medium or signal storing the computer program may be provided.

The above-described computer-implemented method 600 can comprise or be executable via a computer or a network of computers, the computer or network of computers comprising at least one processing unit (e.g., a processor) and at least one data storage (i.e., memory). The described procedural logic may be held in the form of executable code in at least one data storage and executed by the at least one processing unit. The systems and subsystems may send data to the at least one processing unit and, in examples, they may also receive instructions from the at least one processing unit. The processing unit may thereby direct user-initiated and/or automatically generated queries to the system 10. The system 10 is not limited to a particular hardware environment. Thus, distributed devices coupled via a network may perform the techniques described herein. The disclosure also includes electrical signals and computer-readable media defining instructions that, when executed by a processing unit, implement the techniques described herein. As described above, the system 10 may comprise at least one database. Alternatively, or in addition, the system 10 may access a database in a cloud (via a communication interface). The system 10 may comprise a (at least one) communication interface to couple to plurality of magnetometers, the processing unit and/or the database. The communication interface may comprise one or more of a network, internet, a local area network, a wireless local area network, a broadband cellular network, and/or a wired network. In examples, the system 10 may couple to one or more features via a server hosted in a cloud.

In some embodiments, more than one user-borne devices 100 may be provided and operated (e.g., manipulated by a user U) within the sensing volume M created by the plurality of magnetometers 300. Although the method 600 and the system 10 according to the present disclosure have been described for one user-borne device 100, the features as described above may also be applicable to every additional or other user-borne device 100 operated within the sensing volume M.

Although the present invention has been described above and is defined in the attached claims, it should be understood that the invention may alternatively be defined in accordance with the following embodiments:
1. A user-borne device (100), comprising:
   a housing (101),
   a magnetic object (110) coupled to the housing (101), wherein the magnetic object (110) has a magnetization direction (120),
   wherein the magnetic object (110) is configured to create a magnetic field (115) associated with the magnetization direction (120),
   wherein the magnetization direction (120) is oriented with respect to the magnetic object (110) such that a rotation of the magnetic object (110) about a first rotation axis (112), a second rotation axis (114) and a third rotation axis (116) is detectable based on magnetic field measurements with a plurality of magnetometers (300),
   wherein the first rotation axis (112), the second rotation axis (114) and the third rotation axis (116) are orthogonal with respect to each other, and
   wherein the user-borne device (100) is configured to control at least one trigger event based on a rotation of the magnetic object (110) about the first rotation axis (112), the second rotation axis (114) and/or the third rotation axis (116).
2. The user-borne device (100) according to embodiment 1, wherein the magnetic object (110) comprises a longitudinal body (111) extending along the third rotation axis (116).
3. The user-borne device (100) according to embodiment 1 or embodiment 2, wherein the magnetization direction (120) is oriented with respect to the magnetic object (110) such that a rotation of the magnetic object (110) about the magnetization direction (120) is detectable based on the magnetic field measurements with the plurality of magnetometers (300), more specifically wherein the magnetization direction (120) is inclined with respect to the third rotation axis (116).
4. The user-borne device (100) according to embodiment 2 or embodiment 3, wherein the magnetization direction (120) is orthogonal to the third rotation axis (116), more specifically wherein the magnetization direction (120) extends parallel to a plane defined by the first rotation axis (112) and the second rotation axis (114).
5. The user-borne device (100) according to any one of embodiments 2 to 4, wherein the longitudinal body (111) has a cylindrical shape.
6. The user-borne device (100) according to embodiment 5, wherein the magnetic object (120) is diametrically magnetized.
7. The user-borne device (100) according to any one of embodiments 2 to 4, wherein the longitudinal body (111) has a cuboid shape.
8. The user-borne device (100) according to embodiment 7, wherein the magnetic object (120) is width magnetized, or, wherein the magnetic object (120) is thickness magnetized.
9. The user-borne device (100) according to any one of embodiments 1 to 4, wherein the magnetic object (120) is a quadrupole.
10. The user-borne device (100) according to any one of the preceding embodiments, wherein the magnetic object (110) is configured to create an asymmetric magnetic field (115), more specifically wherein the magnetic field (115) is rotationally asymmetric.
11. The user-borne device (100) according to any one of the preceding embodiments, wherein the magnetic object (110) is a permanent magnet.
12. The user-borne device (100) according to any one of the preceding embodiments, wherein the housing (101) defines a first device axis (x_{d}), a second device axis (y_{d}) orthogonal to the first device axis (x_{d}), and a vertical device axis (z_{d}) which is orthogonal to a plane defined by the first device axis (x_{d}) and the second device axis (y_{d}).
13. The user-borne device (100) according to any one of the preceding embodiments, wherein the at least one trigger event is a scroll event and/or a click event and/or an actual orientation event.
14. The user-borne device (100) according to any one of the preceding embodiments, wherein the user-borne device (100) is a computer mouse, a keyboard, a toy, a writing medium, a pointer, a finger ring or a dial.
15. The user-borne device (100) according any one of the preceding embodiments, wherein the magnetic object (110) is arranged rotatable with respect to the housing (101).
16. The user-borne device (100) according to any one of the preceding embodiments, wherein the user-borne device (100) comprises at least one scroll manipulation feature (140) and/or at least one click manipulation feature (150), wherein the at least one scroll manipulation feature (140) and/or the at least one click manipulation feature (150) are movably coupled to the housing (101) and actuatable by a user (U).
17. The user-borne device (100) according to embodiments 16 and 15, wherein the magnetic object (110) is operationally coupled to the at least one click manipulation feature (150) and/or to the at least one scroll manipulation feature (140) such that an actuation of the at least one click manipulation feature (150) and/or the at least one scroll manipulation feature (140) causes a rotation of the magnetic object (110) with respect to the housing (101).
18. The user-borne device (100) according to embodiment 16 or embodiment 17, wherein the user-borne device (100) is in an initial state when the at least one click manipulation feature (150) and/or the at least one scroll manipulation feature (140) are in an initial position, more specifically wherein the at least one click manipulation feature (150) and/or the at least one scroll manipulation feature (140) are not actuated by a user (U).
19. The user-borne device (100) according to embodiment 18, when dependent on embodiment 12, wherein in the initial state of the user-borne device (100), the magnetic object (110) is arranged in the housing (101) such that the first rotation axis (112) is parallel to the first device axis (x_{d}), the second rotation axis (114) is parallel to the vertical device axis (z_{d}), and the third rotation axis (116) is parallel to the second device axis (ya).
20. The user-borne device (100) according to embodiment 19, wherein in the initial state of the user-borne device (100), the magnetization direction (120) is parallel to the first device axis (x_{d}).
21. The user-borne device (100) according to embodiment 19 or embodiment 20, wherein an actuation of the at least one click manipulation feature (150) causes a rotation of the magnetic object (110) with respect to the housing (101) about the third rotation axis (116) by a second rotation angle (α_{y}), more specifically wherein the magnetization direction (120) is rotated about the third rotation axis (116) by the second rotation angle (α_{y}).
22. The user-borne device (100) according to embodiment 21, wherein the user-borne device (100) is configured to control a click event based on the rotation of the magnetization direction (120) about the third rotation axis (116) by the second rotation angle (α_{y}).
23. The user-borne device (100) according to any one of embodiments 19 to 22, when dependent on embodiment 12, wherein an actuation of the at least one scroll manipulation feature (140) causes a rotation of the magnetic object (110) with respect to the housing (101) about the first rotation axis (112) by a first rotation angle (αₓ), more specifically wherein the magnetic object (110) is rotated about the magnetization direction (120) by the first rotation angle (αₓ), particularly about a magnetization axis defined by the magnetization direction (120).
24. The user-borne device (100) according to embodiment 23, wherein the user-borne device (100) is configured to control a scroll event based on the rotation of the magnetic object (110) about the first rotation axis (112) by the first rotation angle (αₓ), more specifically about the magnetization direction (120), particularly about the magnetization axis defined by the magnetization direction (120).
25. The user-borne device (100) according to embodiment 18, when dependent on embodiment 12, wherein in the initial state of the user-borne device (100), the magnetic object (110) is arranged in the housing (101) such that the first rotation axis (112) is parallel to the second device axis (y_{d}), the second rotation axis (114) is parallel to the vertical device axis (z_{d}), and the third rotation axis (116) is parallel to the first device axis (x_{d}).
26. The user-borne device (100) according to embodiment 25, wherein in the initial state of the user-borne device (100), the magnetization direction (120) is parallel to the second device axis (y_{d}).
27. The user-borne device (100) according to embodiment 25 or embodiment 26, wherein an actuation of the at least one scroll manipulation feature (140) causes a rotation of the magnetic object (110) with respect to the housing (101) about the third rotation axis (116) by a first rotation angle (αₓ), more specifically wherein the magnetization direction (120) is rotated about the third rotation axis (116) by the first rotation angle (αₓ).
28. The user-borne device (100) according to embodiment 27, wherein the user-borne device (100) is configured to control a scroll event based on the rotation of the magnetization direction (120) about the third rotation axis (116) by the first rotation angle (αₓ).
29. The user-borne device (100) according to any one of embodiments 25 to 28, wherein an actuation of the at least one click manipulation feature (150) causes a rotation of the magnetic object (110) with respect to the housing (101) about the first rotation axis (112) by a second rotation angle (α_{y}), more specifically wherein the magnetic object (110) is rotated about the magnetization direction (120) by the second rotation angle (α_{y}), particularly about a magnetization axis defined by the magnetization direction (120).
30. The user-borne device (100) according to embodiment 29, wherein the user-borne device (100) is configured to control a click event based on the rotation of the magnetic object about the first rotation axis (112) by the second rotation angle (α_{y}), more specifically about the magnetization direction (120), particularly about the magnetization axis defined by the magnetization direction (120).
31. The user-borne device (100) according to embodiment 18, when dependent on embodiment 12, wherein in the initial state of the user-borne device (100), the magnetic object (110) is arranged in the housing (101) such that the first rotation axis (112) is parallel to the vertical device axis (z_{d}), the second rotation axis (114) is parallel to the second device axis (y_{d}), and the third rotation axis (116) is parallel to the first device axis (x_{d}).
32. The user-borne device (100) according to embodiment 31, wherein in the initial state of the user-borne device (100), the magnetization direction (120) is parallel to the vertical device axis (z_{d}).
33. The user-borne device (100) according to embodiment 31 or embodiment 32, wherein an actuation of the at least one click manipulation feature (150) causes a rotation of the magnetic object (110) with respect to the housing (101) about the second rotation axis (114) by a second rotation angle (α_{y}), more specifically wherein the magnetization direction (120) is rotated about the second rotation axis (114) by the second rotation angle (α_{y}).
34. The user-borne device (100) according to embodiment 33, wherein the user-borne device (100) is configured to control a click event based on the rotation of the magnetization direction (120) about the second rotation axis (114) by the second rotation angle (α_{y}).
35. The user-borne device (100) according to any one of embodiments 31 to 34, wherein an actuation of the at least one scroll manipulation feature (140) causes a rotation of the magnetic object (110) with respect to the housing (101) about the third rotation axis (116) by a first rotation angle (αₓ), more specifically wherein the magnetization direction (120) is rotated about the third rotation axis (116) by the first rotation angle (αₓ).
36. The user-borne device (100) according to embodiment 35, wherein the user-borne device (100) is configured to control a scroll event based on the rotation of the magnetization direction (120) about the third rotation axis (116) by the first rotation angle (αₓ).
37. The user-borne device (100) according to embodiment 18, when dependent on embodiment 12, wherein in the initial state of the user-borne device (100), the magnetic object (110) is arranged in the housing (101) such that the first rotation axis (112) is parallel to the vertical device axis (z_{d}), the second rotation axis (114) is parallel to the first device axis (x_{d}), and the third rotation axis (116) is parallel to the second device axis (ya).
38. The user-borne device (100) according to embodiment 37, wherein in the initial state of the user-borne device (100), the magnetization direction (120) is parallel to the vertical device axis (z_{d}).
39. The user-borne device (100) according to embodiment 37 or embodiment 38, wherein an actuation of the at least one click manipulation feature (150) causes a rotation of the magnetic object (110) with respect to the housing (101) about the third rotation axis (116) by a second rotation angle (α_{y}), more specifically wherein the magnetization direction (120) is rotated about the third rotation axis (116) by a second rotation angle (α_{y}).
40. The user-borne device (100) according to embodiment 39, wherein the user-borne device (100) is configured to control a click event based on the rotation of the magnetization direction (120) about the third rotation axis (116) by the second rotation angle (α_{y}).
41. The user-borne device (100) according to any one of embodiments 37 to 40, wherein an actuation of the at least one scroll manipulation feature (140) causes a rotation of the magnetic object (110) with respect to the housing (101) about the second rotation axis (114) by a first rotation angle (αₓ), more specifically wherein the magnetization direction (120) is rotated about the second rotation axis (114) by the first rotation angle (αₓ).
42. The user-borne device (100) according to embodiment 41, wherein the user-borne device (100) is configured to control a scroll event based on the rotation of the magnetization direction (120) about the second rotation axis (114) by the first rotation angle (αₓ).
43. The user-borne device (100) according to embodiment 18, when dependent on embodiment 12, wherein in the initial state of the user-borne device (100), the magnetic object (110) is arranged in the housing (101) such that the first rotation axis (112) is parallel to the first device axis (x_{d}), the second rotation axis (114) is parallel to the second device axis (y_{d}), and the third rotation axis (116) is parallel to the vertical device axis (z_{d}).
44. The user-borne device (100) according to embodiment 43, wherein in the initial state of the user-borne device (100), the magnetization direction (120) is parallel to the first device axis (x_{d}).
45. The user-borne device (100) according to embodiment 43 or embodiment 44, wherein an actuation of the at least one click manipulation feature (150) causes a rotation of the magnetic object (110) with respect to the housing (101) about the second rotation axis (114) by a second rotation angle (α_{y}), more specifically wherein the magnetization direction (120) is rotated about the second rotation axis (114) by the second rotation angle (α_{y}).
46. The user-borne device (100) according to embodiment 45, wherein the user-borne device (100) is configured to control a click event based on the rotation of the magnetization direction (120) about the second rotation axis (114) by the second rotation angle (α_{y}).
47. The user-borne device (100) according to any one of embodiments 43 to 46, wherein an actuation of the at least one scroll manipulation feature (140) causes a rotation of the magnetic object (110) with respect to the housing (101) about the first rotation axis (112) by a first rotation angle (αₓ), more specifically wherein the magnetic object 110 is rotated about the magnetization direction (120) by the first rotation angle (αₓ), particularly about a magnetization axis defined by the magnetization direction (120).
48. The user-borne device (100) according to embodiment 47, wherein the user-borne device (100) is configured to control a scroll event based on the rotation of the magnetic object (110) about the first rotation axis (112) by the first rotation angle (αₓ), more specifically about the magnetization direction (120), particularly about the magnetization axis defined by the magnetization direction (120).
49. The user-borne device (100) according to embodiment 18, when dependent on embodiment 12, wherein in the initial state of the user-borne device (100), the magnetic object (110) is arranged in the housing (101) such that the first rotation axis (112) is parallel to the second device axis (y_{d}), the second rotation axis (114) is parallel to the first device axis (x_{d}), and the third rotation axis (116) is parallel to the vertical device axis (z_{d}).
50. The user-borne device (100) according to embodiment 49, wherein in the initial state of the user-borne device (100), the magnetization direction (120) is parallel to the second device axis (y_{d}).
51. The user-borne device (100) according to embodiment 49 or embodiment 50, wherein an actuation of the at least one scroll manipulation feature (140) causes a rotation of the magnetic object (110) with respect to the housing (101) about the second rotation axis (114) by a first rotation angle (αₓ), more specifically wherein the magnetization direction (120) is rotated about the second rotation axis (114) by the first rotation angle (αₓ).
52. The user-borne device (100) according to embodiment 51, wherein the user-borne device (100) is configured to control a scroll event based on the rotation of the magnetization direction (120) about the second rotation axis (114) by the first rotation angle (αₓ).
53. The user-borne device (100) according to any one of embodiments 49 to 52, wherein an actuation of the at least one click manipulation feature (150) causes a rotation of the magnetic object (110) with respect to the housing (101) about the first rotation axis (112) by a second rotation angle (α_{y}), more specifically wherein the magnetic object (110) is rotated about the magnetization direction (120) by the second rotation angle (α_{y}), particularly about the magnetization axis defined by the magnetization direction (120).
54. The user-borne device (100) according to embodiment 53, wherein the user-borne device (100) is configured to control a click event based on the rotation of the magnetic object (110) about the first rotation axis (112) by the second rotation angle (α_{y}), more specifically about the magnetization direction (120), particularly about the magnetization axis defined by the magnetization direction (120).
55. The user-borne device (100) according to any one of embodiments 21 to 54, when dependent on embodiment 18, wherein the user-borne device (100) is configured to control a click event only when an absolute value of the second rotation angle (α_{y}) exceeds a second rotation angle threshold (α_{y, th}), more specifically wherein a click event is a first click event when the second rotation angle (α_{y}) is positive relative to the initial state and that a click event is a second click event when the second rotation angle (α_{y}) is negative relative to the initial state.
56. The user-borne device (100) according to any one of embodiments 24 to 55, when dependent on embodiment 18, wherein the user-borne device (100) is configured to control a scroll event only when an absolute value of the first rotation angle (αₓ) exceeds a first rotation angle threshold (α_{x, th}), and more specifically wherein a scroll event is a scroll up event when the first rotation angle (αₓ) is positive relative to the initial state and that a scroll event is a scroll down event when the first rotation angle (αₓ) is negative relative to the initial state.
57. The user-borne device (100) according to embodiment 12 or embodiment 13, wherein the magnetic object (110) is arranged in the housing (101) such that the first rotation axis (112) is parallel to the first device axis (x_{d}), the second rotation axis (114) is parallel to the vertical device axis (z_{d}), and the third rotation axis (116) is parallel to the second device axis (y_{d}), more specifically wherein the magnetization direction (120) is parallel to the first device axis (x_{d}).
58. The user-borne device (100) according to embodiment 57, wherein the at least one trigger event is an actual orientation event, more specifically a selection event, particularly wherein the user-borne device (100) is configured to control the actual orientation event based on the rotation of the magnetization direction (120) and/or the user-borne device (100) about the third rotation axis (116).
59. The user-borne device (100) according to any one of embodiments 1 to 12, wherein the magnetic object (110) is arranged in the housing (101) such that the first rotation axis (112) is parallel to the vertical device axis (z_{d}), the second rotation axis (114) is parallel to the second device axis (y_{d}), and the third rotation axis (116) is parallel to the first device axis (x_{d}), more specifically wherein the magnetization direction (120) is parallel to the vertical device axis (z_{d}).
60. The user-borne device (100) according to embodiment 59, wherein the at least one trigger event is an actual orientation event, more specifically a selection event, wherein the user-borne device (100) is configured to control the actual orientation event based on the rotation of the magnetic object (110) and/or the user-borne device (100) about the first rotation axis (112), more specifically about the magnetization direction (120), particularly about a magnetization axis defined by the magnetization direction (120).
61. The user-borne device (100) according to any one of embodiments 57 to 60, wherein the at least one trigger event is a device mode event, more specifically wherein the user-borne device (100) is configured to control the device mode event based on the rotation of the magnetization direction (120) and/or the user-borne device (100) about the first rotation axis (112), the second rotation axis (114) and/or the third rotation axis (116), particularly wherein the device mode is an eraser mode or a drawing mode.
62. The user-borne device (100) according to any one of embodiments 57 to 61, wherein the housing (101) has a longitudinal and cylindrical shape, and wherein the vertical device axis (z_{d}) and/or the third rotation axis (116) extends in the longitudinal direction of the housing (101).
63. The user-borne device (100) according to embodiment 62, wherein the housing (101) comprises a first end (103) and wherein the housing (101) comprises a second end (104) on an opposite side of the housing (101) with respect to the first end (103), more specifically wherein the magnetic object (110) is arranged proximate the second end (104), particularly wherein the magnetic object (110) is fixedly coupled to the housing (101).
64. The user-borne device (100) according to any one of embodiments 57 to 63, wherein the user-borne device is a writing and/or drawing device, more specifically a stylus, or a brush.
65. The user-borne device (100) according to any one of embodiments 57 to 64, wherein the magnetic object (110) is a first magnetic object (110a) and wherein the magnetization direction (110) is a first magnetization direction (110a), and wherein the user-borne device (100) comprises a second magnetic object (110b) having a second magnetization direction (120b).
66. The user-borne device (100) according to embodiment 65, when dependent on embodiment 62, wherein the second magnetic object (110b) is arranged proximate the first end (103), more specifically wherein the housing (101) comprises a tip portion (112) and wherein the first end (103) is arranged at the tip portion (112).
67. The user-borne device (100) according to embodiment 65 or embodiment 66, when dependent on embodiment 2, wherein the longitudinal body (111) is a first longitudinal body (111a), and wherein the second magnetic object (110a) comprises a second longitudinal body (111b) extending along the third rotation axis (116).
68. The user-borne device (100) according to any one of embodiments 65 to 67, wherein the second magnetic object (110b) comprises a second magnetization direction (120b) which is substantially parallel to the vertical device axis (z_{d}).
69. The user-borne device (100) according to embodiment 68, when dependent on embodiment 57 or embodiment 58, wherein the second magnetization direction (120b) is substantially orthogonal to the first magnetization direction (120a), or,
   when dependent on embodiment 59 or embodiment 60 wherein the second magnetization direction (120b) is substantially parallel to the first magnetization direction (120a).
70. The user-borne device (100) according to any one of embodiments 67 to 69, wherein the second longitudinal body (111b) has a cylindrical shape, or, wherein the second longitudinal body (111b) has a cuboid shape.
71. The user-borne device (100) according to any one of embodiments 65 to 70, wherein the second magnetic object (120b) is axially magnetized.
72. The user-borne device (100) according to any one of embodiments 65 to 71, wherein the magnetic field (115) created by the first magnetic object (110a) is a first magnetic field, and wherein the second magnetic object (110b) is configured to create a second magnetic field, more specifically wherein the second magnetic field is rotationally symmetric, particularly with respect to the third rotation axis (116) and/or the vertical device axis (z_{d}).
73. The user-borne device (100) according to any one of embodiments 65 to 72, wherein the second magnetic object (110) is a permanent magnet.
74. The user-borne device (100) according to any one of embodiments 65 to 73, wherein the second magnetic object (110b) is fixedly coupled to the housing (101).
75. The user-borne device (100) according to any one of embodiments 72 to 74, when dependent on embodiment 62, wherein only the first magnetic field is measurable by a plurality of magnetometers (300), when, during a user operation, the second end (104) of the user-borne device (100) is held by a user (U) in proximity to an interaction surface (210), more specifically wherein the second end (104) is distal to the interaction surface (210).
76. The user-borne device (100) according to any one of the preceding embodiments, wherein the user-borne device (100) is operable on an interaction surface (210).
77. The user-borne device (100) of any one of the preceding embodiments, wherein the user-borne device (100) is electrically and/or electronically passive.
78. The user-borne device (100) according to any one of the preceding embodiments, wherein the user-borne device (100) comprises a tactile and/or audible feedback device configured to provide a tactile and/or audible feedback to a user (U) based on a control of at least one trigger event.
79. The user-borne device (100) according to embodiment 78, when dependent on embodiment 17, wherein the tactile and/or audible feedback device provides a tactile and/or audible feedback to a user (U) based on an actuation of the at least one click manipulation feature (150) and/or the at least one scroll manipulation feature (140).
80. The user-borne device (100) according to embodiment 78, when dependent on embodiment 58, wherein the tactile and/or audible feedback device provides a tactile and/or audible feedback to a user (U) based on the rotation of the magnetization direction (120) and/or the user-borne device (100) about the third rotation axis (116).
81. The user-borne device (100) according to any one of embodiments 18 to 56, wherein the user-borne device (100) comprises a biasing mechanism, wherein the biasing mechanism is configured to urge the magnetic object (110), the at least one click manipulation feature (150) and/or the at least one scroll manipulation feature (140) from an actuated state to the initial state, more specifically wherein in the actuated state of the user-borne device (100), the magnetic object (110) is rotated relative to the housing (110) and/or the at least one click manipulation feature (150) and/or the at least one scroll manipulation (140) is actuated by a user (U).
82. A system (10) for determining a manipulation of a user-borne device (100) by a user (U), the system (10) comprising:
   a user-borne device (100) according to any one of the preceding embodiments, and
   a plurality of magnetometers (300),
   wherein the plurality of magnetometers (300) is configured to measure the magnetic field created by the magnetic object (110).
83. The system (10) according to embodiment 82, wherein the system (10) comprises or is connectable to a processing unit (400) which is configured to track a movement of the magnetic object (110) in at least six degrees of freedom, more specifically wherein the processing unit (400) is configured to determine the at least one trigger event.
84. The system (10) according to embodiment 82 or embodiment 83, when dependent on any one of embodiments 1 to 56 or 76 to 81, wherein the at least one trigger event is a click event and/or a scroll event, and/or an actual orientation event.
85. The system (10) according to embodiment 82 or embodiment 83, when dependent on any one of embodiments 1 to 12 or 57 to 81, wherein the at least one trigger event is an actual orientation event, more specifically a selection event, and/or a device mode event.
86. The system (10) according to embodiment 84, when dependent on embodiment 17, wherein the system (10) is configured to determine the scroll event and/or the click event based on determining an actuation of the at least one scroll manipulation feature (140) and/or at least one click manipulation feature (150) by a user (U), more specifically wherein the magnetic object (110) is rotated about the first rotation axis (112), the second rotation axis (114) and/or the third rotation axis (116).
87. The system (10) according to embodiment 85, wherein the system (10) is configured to determine the actual orientation event, more specifically the selection event, based on determining a rotation of the magnetic object (110) and/or the user-borne device (100) about the third rotation axis (116) relative to an interaction surface (210), specifically, wherein the magnetic object (110) is fixedly coupled to the user-borne device (100).
88. The system (10) according to any one of embodiments 82, 83, 85 or 87, when dependent on any one of embodiments 1 to 12 or 57 to 81, wherein the magnetic object (110) is a first magnetic object (110a) and wherein the magnetization direction (110) is a first magnetization direction (110a), and wherein the user-borne device (100) comprises a second magnetic object (110b) having a second magnetization direction (120b).
89. The system (10) according to embodiment 88, wherein the housing (101) comprises a first end (103) and wherein the housing (101) comprises a second end (104) on an opposite side of the housing (101) with respect to the first end (103).
90. The system (10) according to embodiment 89, wherein the first magnetic object (110a) is arranged proximate the second end (104), wherein the second magnetic object (110b) is arranged proximate the first end (103), more specifically wherein the housing comprises a tip portion (102) at the first end (103).
91. The system (10) according to any one of embodiments 88 to 90, wherein the magnetic field (115) created by the first magnetic object (110a) is a first magnetic field, and wherein the second magnetic object (110b) is configured to create a second magnetic field, more specifically wherein the second magnetic field is rotationally symmetric, particularly with respect to the third rotation axis (116) and/or a vertical device axis (z_{d}).
92. The system (10) according to embodiment 91, wherein the system (10) is configured to detect that the second end (104) and/or the first magnetic object (110a) is in proximity to an interaction surface (210), more specifically wherein the detection is based on an orientation of the first magnetic field associated with the first magnetization direction (120a) relative to the plurality of magnetometers (300).
93. The system (10) according to embodiment 92, wherein the at least one trigger event is a device mode event, wherein the system (10) is configured to determine and activate the device mode event in response to detecting that the second end (104) and/or the first magnetic object (110a) is in proximity to the interaction surface (210), more specifically wherein only the first magnetic object (110a) is within a sensing volume (M) generated by the plurality of magnetometers (300), particularly wherein the device mode is an eraser mode or a drawing mode.
94. The system (10) according to any one of embodiments 91 to 93, wherein the system (10) is configured to detect that the first end (103) and/or the second magnetic object (110b) is in proximity to an interaction surface (210), more specifically wherein the detection is based on an orientation of the second magnetic field associated with the second magnetization direction (120b) relative to the plurality of magnetometers (300).
95. The system (10) according to embodiment 94, when dependent on embodiment 93, wherein the system (10) is configured to determine and deactivate the device mode event in response to detecting that the first end (103) and/or the second magnetic object (110b) is in proximity to the interaction surface (210), more specifically wherein only the second magnetic object (110b) is within a sensing volume generated by the plurality of magnetometers (300).
96. The system (10) according to any one of embodiments 82 to 95, wherein the user-borne device (100) is operable on an interaction surface (210), more specifically wherein the system (10) is configured to determine a location of the user-borne device (100) within a sensing volume created by the plurality of magnetometers (300) and/or relative to the interaction surface (210) based on the magnetic field measurements, particularly wherein the system (10) is configured to assume a contact location of the user-borne device (100) relative to the interaction surface (210).
97. The system (10) according to any one of embodiments 82 to 96, wherein the housing (101) defines a first device axis (x_{d}), a second device axis (y_{d}) orthogonal to the first device axis (x_{d}), and a vertical device axis (z_{d}) which is orthogonal to a plane defined by the first device axis (x_{d}) and the second device axis (y_{d}).
98. The system (10) according to embodiment 97 and embodiment 96, wherein the user-borne device (100) is translatable on the interaction surface (210) along the first device axis (x_{d}) and/or the second device axis (y_{d}).
99. The system (10) according to any one of embodiments 82 to 98, wherein the system (10) comprises at least one output device (500), wherein the at least one output device (500) is configured to represent the user-borne device (100), more specifically wherein the at least one output device (500) is configured to visually reproduce the user-borne device (100) as a virtual object.
100. The system (10) according to embodiment 99, when dependent on embodiment 96, wherein the system (10) is configured to reproduce a movement of the user-borne device (100) on the interaction surface (210) as a movement of the virtual object on the at least one output device (500).
101. The system (10) according to embodiment 99 or embodiment 100, wherein the system (10) is configured to visually reproduce the at least one trigger event on the output device (500).
102. The system (10) according to any one of embodiments 99 to 101, wherein the output device (500) is a display or a screen.
103. The system (10) according to any one of embodiments 83 to 102, wherein the system (10) comprises an electronics device (700), wherein the processing unit (400) is integrated in the electronics device (700).
104. The system (10) according to embodiment 103, when dependent on embodiment 99, wherein the output device (500) is integrated in the electronics device (700).
105. The system (10) according to any one of embodiments 82 to 104, wherein the plurality of magnetometers (300) is integrated in a wall, a furniture, a notebook, an electronics device, a screen or display, a keyboard and/or a mouse pad.
106. The system (10) according to any one of embodiments 96 to 105, wherein the system (10) comprises an interaction support (200) having an interaction support surface (230), wherein the interaction surface (210) is at least a partial surface of the interaction support surface (230).
107. The system (10) according to embodiment 106, wherein the interaction support (200) is a furniture, a notebook, an electronics device, a screen, a wall, or a mouse pad.
108. A method (600) for determining a manipulation of a user-borne device (100) by a user (U), comprising:
   obtaining magnetic field measurements (610) associated with a magnetic field created by a magnetic object (110) and measured with a plurality of magnetometers (300),
   wherein the magnetic object (110) is coupled to a user-borne device (100) and wherein the magnetic object (110) comprises a magnetization direction (120) being at an orientation with respect to the magnetic object (110),
   detecting a rotation (630) of the magnetic object (110) about a first rotation axis (112), a second rotation axis (114) and a third rotation axis (116) based on the obtained magnetic field measurements, wherein the first rotation axis (112), the second rotation axis (114) and the third rotation axis (116) are orthogonal with respect to each other, and
   determining at least one trigger event (640) based on the detected rotation.
109. The method (600) according to embodiment 108, wherein detecting a rotation (630) comprises:
   detecting a rotation of the magnetic object (110) about the magnetization direction (120) based on the obtained magnetic field measurements associated with the orientation of the magnetization direction (120) with respect to the magnetic object (110).
110. The method (600) according to embodiment 108 or embodiment 109, wherein determining at least one trigger event (640) comprises:
   determining a manipulation of the user-borne device (100), more specifically a control of the user-borne device (100), within a sensing volume (M) created by the plurality of magnetometers (300) based on the detected rotation, and
   associating the manipulation with the at least one trigger event.
111. The method (600) according to any one of embodiments 108 to 110, wherein the user-borne device (100) comprises at least one scroll manipulation feature (140) and/or at least one click manipulation feature (150) operationally coupled to the magnetic object (110) and movably coupled to a housing (101) of the user-borne device (100), wherein the magnetic object (110) is movably coupled to the housing (101), and wherein determining at least one trigger event (640) comprises:
   determining a click event based on detecting a rotation of the magnetic object (110) relative to the housing (101) due to an actuation of the at least one click manipulation feature (150), and/or
   determining a scroll event based on a detected rotation of the magnetic object (110) relative to the housing (101) due to an actuation of the at least one scroll manipulation feature (140).
112. The method (600) according to embodiment 111, wherein the user-borne device (100) is configured according to any one of embodiments 1 to 56 or 76 to 81.
113. The method (600) according to any one of embodiments 108 to 110, wherein the user-borne device (100) is operable on an interaction surface (210) and wherein the magnetic object (110) is fixedly coupled to the user-borne device (100), wherein determining at least one trigger event (640) comprises:
   determining an actual orientation event, more specifically a selection event, based on a detected rotation of the magnetic object (110) about the third rotation axis (116) relative to the interaction surface (210).
114. The method (600) according to any one of embodiments 108 to 110 or embodiment 113, wherein the user-borne device (100) is operable on an interaction surface (210) and wherein the magnetic object (110) is fixedly coupled to the user-borne device (100), wherein the magnetic object (110) is a first magnetic object (110a) and wherein the magnetization direction (110) is a first magnetization direction (110a), and wherein the user-borne device (100) comprises a second magnetic object (110b) having a second magnetization direction (120b),
   wherein determining at least one trigger event (640) comprises:
   detecting that the first magnetic object (110a) is in proximity to the interaction surface (210) based on an orientation of the first magnetization direction (110a) and an associated first magnetic field relative to the interaction surface (210), or,
   detecting that the second magnetic object (110b) is in proximity to the interaction surface (210) based on an orientation of the second magnetization direction (110b) and an associated second magnetic field relative to the interaction surface (210).
115. The method (600) according to embodiment 114, wherein determining at least one trigger event (640) comprises:
   determining a device mode event in response to detecting that the first magnetic object (110a) is in proximity to the interaction surface (210) and activating the device mode event in response to determining the device mode event, or,
   deactivating the device mode event in response to detecting that the second magnetic object (110b) is in proximity to the interaction surface (210).
116. The method (600) according to any one of embodiments 113 to 115, wherein the user-borne device (100) is configured according to any one of embodiments 1 to 12 or 57 to 81.
117. The method (600) according to any one of embodiments 108 to 116, further comprising: determining a user-borne device location (620) within a sensing volume (M) created by the plurality of magnetometers (300) and based on the obtained magnetic field measurements, more specifically wherein detecting the rotation (620) is based on determining the user-borne device location (620).
118. The method (600) according to any one of embodiments 108 to 116, comprising:
   defining a reference coordinate system (XYZ) relative to the plurality of magnetometers (300), the reference coordinate system (XYZ) comprising a first reference axis (X), a second reference axis (Y) and a vertical reference axis (Z), wherein the first reference axis (X) and the second reference axis (Y) are orthogonal to each other, and wherein the vertical reference axis (Z) is orthogonal to the first reference axis (X) and the second reference axis (Y) and extends through a center of the plurality of magnetometers (300), optionally wherein the first reference axis (X) and the second reference axis (Y) are defined on a magnetometer plane (310) defined by a plane that extends through a majority of the plurality of magnetometers (300), and wherein the vertical reference axis (Z) is orthogonal to the magnetometer plane (310).
119. The method (600) according to embodiment 118, when dependent on embodiment 117, wherein determining a user-borne device location (620) comprises:
   determining an absolute magnetic object location indicative of an absolute magnetic object position and/or an absolute magnetic object orientation of the magnetic object (110) relative to the reference coordinate system (XYZ), more specifically wherein the absolute magnetic object location is determined based on the obtained magnetic field measurements,
   more specifically wherein the absolute magnetic object location comprises an absolute magnetic object position and/or an absolute magnetic object orientation relative to the reference coordinate system (XYZ).
120. The method (600) according to embodiment 119, wherein detecting a rotation (630) is based on the absolute magnetic object orientation.
121. The method (600) according to any one of embodiments 117 to 120, wherein determining a user-borne device location (620) comprises:
   determining a relative magnetic object location indicative of a relative magnetic object position and/or a relative magnetic object orientation of the magnetic object relative to the user-borne device, more specifically to a device coordinate system.
122. The method (600) according to embodiment 121, wherein the relative magnetic object location comprises a relative magnetic object position and/or a relative magnetic object orientation relative to the device coordinate system, and wherein detecting a rotation (630) is based on the relative magnetic object orientation.
123. The method (600) according to embodiment 121 or embodiment 122, when dependent on embodiment 119, wherein determining a relative magnetic object location is based on the absolute magnetic object location and a first set of geometric parameters, more specifically wherein the first set of geometric parameters comprises predefined geometric parameters indicative of a geometric position and a geometric orientation of the magnetic object (100) relative to the user-borne device (100), more specifically in an initial state of the user-borne device (100).
124. The method (600) according to any one of embodiments 118 to 123, further comprising:
   determining an interaction surface location, wherein the interaction surface location is indicative of an interaction surface position, an interaction surface orientation and/or an interaction surface distance relative to the reference coordinate system (XYZ), more specifically to a magnetometer plane (310), and
   determining the user-borne device location (620) relative to the interaction surface (210) based on the interaction surface location, and more specifically
   assuming a contact location of the user-borne device (100) relative to the interaction surface (210).
125. The method (600) according to any one of embodiments 108 to 124, further comprising representing (650) the magnetic object (110) and/or the user-borne device (100) on an output device (510), more specifically wherein representing (650) comprises:
   reproducing the user-borne device (100) as a virtual object on the output device, and
   reproducing a movement of the user-borne device (100) within the sensing volume (M) as a movement of the virtual object on output device (500).
126. The method (600) according to any one of embodiments 108 to 125, further comprising: rotating the magnetic object (110) about the first rotation axis (112), the second rotation axis (114) and/or the third rotation axis (116) to generate the at least one trigger event.
127. The method (600) according to any one of embodiments 108 to 125, wherein the method (600) is a computer-implemented method.

### REFERENCE NUMERALS

- X: first reference axis
- Y: second reference axis
- Z: vertical reference axis
- x_{d}: first device axis
- y_{d}: second device axis
- z_{d}: vertical device axis
- Xₛ: first surface axis
- yₛ: second surface axis
- zₛ: vertical surface axis
- M: sensing volume
- N: north pole
- S: south pole
- 10: system
- 100: user-borne device
- 101: housing
- 110: magnetic object
- 111: longitudinal body
- 112: first rotation axis
- 113: poles
- 114: second rotation axis
- 115: magnetic field
- 116: third rotation axis
- 120: magnetization direction
- 130: contact surface or point
- 140: scroll manipulation feature
- 150: click manipulation feature
- 200: interaction support
- 210: interaction surface
- 220: selection area
- 221: selection portions
- 230: interaction support surface
- 300: plurality of magnetometers
- 310: magnetometer plane
- 320: magnetometer body
- 400: processing unit
- 500: at least one output device
- 510: first output device
- 700: electronics device
- U: user
- αₓ: first rotation angle
- α_{x,th}: first rotation angle threshold
- α_{y}: second rotation angle
- α_{y,th}: second rotation angle threshold
- S_{k,l}: magnetometer
- θ: writing and/or drawing mode angle

## Claims

1. A user-borne device (100), comprising:
a housing (101),
a magnetic object (110) coupled to the housing (101), wherein the magnetic object (110) has a magnetization direction (120),
wherein the magnetic object (110) is configured to create a magnetic field (115) associated with the magnetization direction (120),
wherein the magnetization direction (120) is oriented with respect to the magnetic object (110) such that a rotation of the magnetic object (110) about a first rotation axis (112), a second rotation axis (114) and a third rotation axis (116) is detectable based on magnetic field measurements with a plurality of magnetometers (300),
wherein the first rotation axis (112), the second rotation axis (114) and the third rotation axis (116) are orthogonal with respect to each other, and
wherein the user-borne device (100) is configured to control at least one trigger event based on a rotation of the magnetic object (110) about the first rotation axis (112), the second rotation axis (114) and/or the third rotation axis (116).

2. The user-borne device (100) according to claim 1, wherein the magnetization direction (120) is oriented with respect to the magnetic object (110) such that a rotation of the magnetic object (110) about the magnetization direction (120) is detectable based on the magnetic field measurements with the plurality of magnetometers (300), more specifically wherein the magnetization direction (120) is inclined with respect to the third rotation axis (116).

3. The user-borne device (100) according to claim 1 or claim 2, wherein the magnetic object (110) is configured to create an asymmetric magnetic field (115), more specifically wherein the magnetic field (115) is rotationally asymmetric, particularly wherein the magnetic object (110) is a permanent magnet.

4. The user-borne device (100) according to any one of the preceding claims, wherein the housing (101) defines a first device axis (x_{d}), a second device axis (y_{d}) orthogonal to the first device axis (x_{d}), and a vertical device axis (z_{d}) which is orthogonal to a plane defined by the first device axis (x_{d}) and the second device axis (y_{d}).

5. The user-borne device (100) according to any one of the preceding claims, wherein the at least one trigger event is a scroll event and/or a click event and/or an actual orientation event.

6. The user-borne device (100) according to any one of the preceding claims, wherein the user-borne device (100) comprises at least one scroll manipulation feature (140) and/or at least one click manipulation feature (150), wherein the at least one scroll manipulation feature (140) and/or the at least one click manipulation feature (150) are movably coupled to the housing (101) and actuatable by a user (U), more specifically wherein the user-borne device (100) is in an initial state when the at least one click manipulation feature (150) and/or the at least one scroll manipulation feature (140) are in an initial position, particularly wherein the at least one click manipulation feature (150) and/or the at least one scroll manipulation feature (140) are not actuated by a user (U).

7. The user-borne device (100) according to claim 6, when dependent on claim 4, wherein in the initial state of the user-borne device (100), the magnetic object (110) is arranged in the housing (101) such that the first rotation axis (112) is parallel to the vertical device axis (z_{d}), the second rotation axis (114) is parallel to the second device axis (y_{d}), and the third rotation axis (116) is parallel to the first device axis (x_{d}), more specifically wherein the magnetization direction (120) is parallel to the vertical device axis (z_{d}).

8. The user-borne device (100) according to claim 7, wherein an actuation of the at least one click manipulation feature (150) causes a rotation of the magnetic object (110) with respect to the housing (101) about the second rotation axis (114) by a second rotation angle (α_{y}), more specifically wherein the magnetization direction (120) is rotated about the second rotation axis (114) by the second rotation angle (α_{y}), particularly wherein the user-borne device (100) is configured to control a click event based on the rotation of the magnetization direction (120) about the second rotation axis (114) by the second rotation angle (α_{y}).

9. The user-borne device (100) according to claim 7 or claim 8, wherein an actuation of the at least one scroll manipulation feature (140) causes a rotation of the magnetic object (110) with respect to the housing (101) about the third rotation axis (116) by a first rotation angle (αₓ), more specifically wherein the magnetization direction (120) is rotated about the third rotation axis (116) by the first rotation angle (αₓ), particularly wherein the user-borne device (100) is configured to control a scroll event based on the rotation of the magnetization direction (120) about the third rotation axis (116) by the first rotation angle (αₓ).

10. The user-borne device (100) according to claim 8 or claim 9, when dependent on claim 6, wherein the user-borne device (100) is configured to control a click event only when an absolute value of the second rotation angle (α_{y}) exceeds a second rotation angle threshold (α_{y,th}), more specifically wherein a click event is a first click event when the second rotation angle (α_{y}) is positive relative to the initial state and that a click event is a second click event when the second rotation angle (α_{y}) is negative relative to the initial state.

11. The user-borne device (100) according to claim 9 or claim 10, when dependent on claim 6, wherein the user-borne device (100) is configured to control a scroll event only when an absolute value of the first rotation angle (αₓ) exceeds a first rotation angle threshold (α_{x, th}), and more specifically wherein a scroll event is a scroll up event when the first rotation angle (αₓ) is positive relative to the initial state and that a scroll event is a scroll down event when the first rotation angle (αₓ) is negative relative to the initial state.

12. The user-borne device (100) according to claim 4 or claim 5, wherein the magnetic object (110) is arranged in the housing (101) such that the first rotation axis (112) is parallel to the first device axis (x_{d}), the second rotation axis (114) is parallel to the vertical device axis (Z_{d}), and the third rotation axis (116) is parallel to the second device axis (y_{d}), more specifically wherein the magnetization direction (120) is parallel to the first device axis (x_{d}).

13. The user-borne device (100) according to claim 12, wherein the at least one trigger event is an actual orientation event, more specifically a selection event, particularly wherein the user-borne device (100) is configured to control the actual orientation event based on the rotation of the magnetization direction (120) and/or the user-borne device (100) about the third rotation axis (116), and/or
wherein the at least one trigger event is a device mode event, more specifically wherein the user-borne device (100) is configured to control the device mode event based on the rotation of the magnetization direction (120) and/or the user-borne device (100) about the first rotation axis (112), the second rotation axis (114) and/or the third rotation axis (116), particularly wherein the device mode is an eraser mode or a drawing mode.

14. A system (10) for determining a manipulation of a user-borne device (100) by a user (U), the system (10) comprising:
a user-borne device (100) according to any one of the preceding claims, and
a plurality of magnetometers (300),
wherein the plurality of magnetometers (300) is configured to measure the magnetic field created by the magnetic object (110).

15. A method (600) for determining a manipulation of a user-borne device (100) by a user (U), comprising:
obtaining magnetic field measurements (610) associated with a magnetic field created by a magnetic object (110) and measured with a plurality of magnetometers (300), wherein the magnetic object (110) is coupled to a user-borne device (100) and wherein the magnetic object (110) comprises a magnetization direction (120) being at an orientation with respect to the magnetic object (110),
detecting a rotation (630) of the magnetic object (110) about a first rotation axis (112), a second rotation axis (114) and a third rotation axis (116) based on the obtained magnetic field measurements, wherein the first rotation axis (112), the second rotation axis (114) and the third rotation axis (116) are orthogonal with respect to each other, and
determining at least one trigger event (640) based on the detected rotation.
